# EUROPEAN PATENT APPLICATION

(11) **EP 4 418 063 A1**
(43) Date of publication of application: **21.08.2024**
(21) Application number: 22880894.5
(22) Date of filing: 06.10.2022
(51) Int. Cl.: G05D 1/02, B60W 50/029, B60W 50/035

(54) **INFORMATION PROCESSING DEVICE, INFORMATION PROCESSING METHOD, AND PROGRAM**

(30) Priority: 15.10.2021 JP 2021169342
(71) Applicant: Sony Group Corporation, Tokyo 108-0075 (JP)
(72) Inventor: KOJIMA, Kohei, Tokyo 108-0075 (JP)
(74) Representative: Witte, Weller & Partner Patentanwälte mbB
(86) International application number: PCT/JP2022/037377
(87) International publication number: WO 2023/063199

(57) **Abstract**

The present disclosure relates to an information processing device, an information processing method, and a program that improve stability of automated driving control by enabling appropriate acquisition of a substitutable sensing result from another sensor at the time of failure of a specific sensor without increasing a communication load in a case where there is no abnormality in the sensor in automated driving control using a plurality of sensors.

In a case where a malfunction of a sensor is detected in a first subsystem among a plurality of subsystems, a second subsystem including a sensor that detects a sensing result that is substitutable for a sensing result of the sensor of the first subsystem is caused to transfer the sensing result of the sensor to the first subsystem. The present disclosure can be applied to a vehicle control system of a vehicle that performs automated driving.

## Description

### TECHNICAL FIELD

The present disclosure relates to an information processing device, an information processing method, and a program, and more particularly relates to an information processing device, an information processing method, and a program capable of improving stability of automated driving control using a plurality of sensors.

### BACKGROUND ART

An automated driving control system that implements automated driving by performing a plurality of processes in a distributed manner by a plurality of control devices on the basis of sensing results of a plurality of sensors has been proposed (see Patent Document 1).

In this automated driving control system, among the sensing results of the plurality of sensors, a sensing result that is capable of being shared and used is distributed among the plurality of control devices, with a tag indicating that it is capable of being shared being attached.

Each of the plurality of control devices acquires a sensing result that is normally used and is necessary for its own process and executes the process, and also acquires a sensing result to which a tag indicating that it is not normally used but is substitutable for the sensing result that is normally used, that is, it is capable of being shared and used is attached.

Thus, even if a failure occurs in a specific sensor that supplies a sensing result that is normally used, each of the control devices can maintain a normal operation by using a sensing result of another sensor in which no failure has occurred, the sensing result to which the tag indicating that it is capable of being shared and used being attached.

### CITATION LIST

### PATENT DOCUMENT

Patent Document 1: Japanese Patent Application Laid-Open No. 10-243004

### SUMMARY OF THE INVENTION

### PROBLEMS TO BE SOLVED BY THE INVENTION

However, in the technique described in Patent Document 1, the sensing results of the plurality of sensors are distributed such that the sensing result to which the tag indicating that it is capable of being shared and used is attached can be acquired among a plurality of control devices even in a case where there is no abnormality in the sensor.

For this reason, normally, since the sensing result to which the tag indicating that it is not used unless a failure occurs in the sensor and it is capable of being shared and used is attached is constantly distributed in the automated driving control system, there is a possibility that the communication load of the unnecessary sensing result is increased and the entire operation becomes unstable.

The present disclosure has been made in view of such a situation, and particularly improves stability of operation in automated driving control using a plurality of sensors.

### SOLUTIONS TO PROBLEMS

An information processing device and a program according to one aspect of the present disclosure are an information processing device and a program including a plurality of subsystems each including a sensor that detects a sensing result related to control of automated driving, and a processing unit that executes predetermined processing related to the automated driving on the basis of the sensing result detected by the sensor, and a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem.

An information processing method according to one aspect of the present disclosure is an information processing method for an information processing device including a plurality of subsystems each including a sensor that detects a sensing result related to control of automated driving, and a processing unit that executes predetermined processing related to the automated driving on the basis of the sensing result detected by the sensor, and a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem, the information processing method including causing, by the sensor resource management unit, in a case where a malfunction of the sensor is detected in a first subsystem among the plurality of subsystems, the second subsystem, which is different from the first subsystem and includes the sensor that detects a sensing result that is substitutable for a sensing result of the sensor of the first subsystem, to transfer the sensing result of the sensor to the first subsystem.

In one aspect of the present disclosure, a plurality of subsystems each including a sensor that detects a sensing result related to control of automated driving, and a processing unit that executes predetermined processing related to the automated driving on the basis of the sensing result detected by the sensor, and in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, the sensing result of the sensor is transferred to the first subsystem.

### BRIEF DESCRIPTION OF DRAWINGS

Fig. 1 is a block diagram illustrating a configuration example of a divided type control system.
Fig. 2 is a block diagram illustrating a configuration example of a centralized control system.
Fig. 3 is a diagram illustrating a concept of a control system of the present disclosure.
Fig. 4 is a diagram illustrating an outline of the control system of the present disclosure.
Fig. 5 is a diagram illustrating the outline of the control system of the present disclosure.
Fig. 6 is a block diagram illustrating a configuration example of a vehicle control system of the present disclosure.
Fig. 7 is a diagram illustrating an example of a sensing region.
Fig. 8 is a diagram illustrating a configuration example of a sensor resource management table.
Fig. 9 is a diagram illustrating a configuration example of a substitutable map.
Fig. 10 is a flowchart describing activation processing by the vehicle control system of Fig. 6.
Fig. 11 is a flowchart illustrating sensor resource management processing by the vehicle control system in Fig. 6.
Fig. 12 is a diagram illustrating an outline of a first application example of the present disclosure.
Fig. 13 is a block diagram illustrating a configuration example of the first application example of the vehicle control system of the present disclosure.
Fig. 14 is a flowchart illustrating sensing result storage processing by the vehicle control system in Fig. 13.
Fig. 15 is a flowchart describing correlation analysis processing by the vehicle control system in Fig. 13.
Fig. 16 is a diagram illustrating an outline of a second application example of the present disclosure.
Fig. 17 is a block diagram illustrating a configuration example of the second application example of the vehicle control system of the present disclosure.
Fig. 18 is a flowchart illustrating failure detection processing by the vehicle control system in Fig. 17.
Fig. 19 is a block diagram illustrating a configuration example of a general-purpose computer.

### MODE FOR CARRYING OUT THE INVENTION

Hereinafter, a preferred embodiment of the present disclosure will be described in detail with reference to the accompanying drawings. Note that in the present specification and the drawings, components having substantially the same functional configuration are denoted by the same reference numerals, and redundant explanations are omitted.

Hereinafter, modes for carrying out the present technology will be described. The description will be made in the following order.
1. Preferred embodiment
2. First Application Example
3. Second Application Example
4. Example of execution by software

### <<1. Preferred embodiments

### <Outline of Present Disclosure>

The present disclosure improves the stability of the entire operation by enabling appropriate acquisition of a substitutable sensing result from another sensor at the time of failure of a specific sensor without increasing a communication load in a case where there is no abnormality in the sensor in automated driving control based on sensing results of a plurality of sensors.

In general, a system that implements control of automated driving is provided with a plurality of sensors, and a plurality of processes needed for automated driving is implemented on the basis of sensing results of the plurality of sensors.

In this case, the plurality of processes needed for automated driving is individually implemented by a plurality of subsystems.

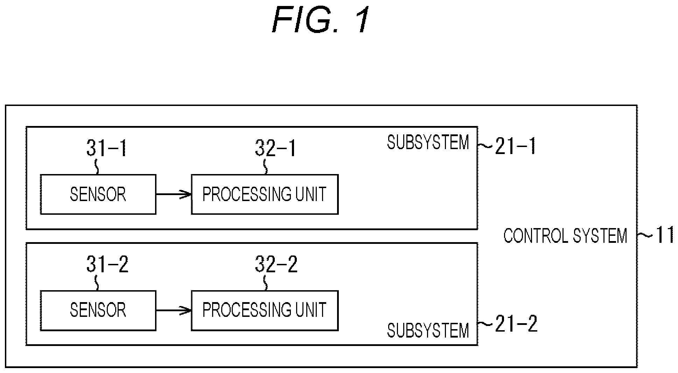

More specifically, the plurality of processes needed for automated driving is implemented by, for example, a control system 11 as illustrated in Fig. 1.

The control system 11 includes subsystems 21-1 and 21-2, and implements the plurality of processes needed for automated driving. Hereinafter, in a case where it is not necessary to distinguish the subsystems 21-1 and 21-2, they are simply referred to as a subsystem 21, and the same applies to other configurations.

Note that an example in which two different processes are implemented in each of the subsystems 21-1 and 21-2 in the control system 11 of Fig. 1 will be described. However, there are actually two or more processes needed for automated driving, and therefore, it is assumed that there are two or more processes in the actual subsystem 21.

The subsystems 21-1 and 21-2 include sensors 31-1 and 31-2 and processing units 32-1 and 32-2 needed for respective processes. Then, the processing unit 32-1 implements first processing using a sensing result of the sensor 31-1, and similarly, the processing unit 32-2 implements second processing using a sensing result of the sensor 31-2.

The control system 11 is configured to execute various types of processing needed for automated driving on the basis of a first processing result and a second processing result by the subsystems 21-1 and 21-2. Here, the first processing and the second processing are individually divided in units of the subsystem 21, and are independently executed. Therefore, the control system 11 has a divided type configuration that divides and executes a plurality of processes.

In the control system 11 of Fig. 1, with such a divided type configuration, even in a case where a failure occurs in any of the sensors 31-1 and 31-2, the processing units 32-1 and 32-2 in the subsystems 21-1 and 21-2 including the sensor 31 in which no failure has occurred can independently implement normal processing.

Furthermore, regarding an operation verification test of the control system 11, each of the subsystems 21-1 and 21-2 can be individually performed, and thus, regarding the operation verification test of the control system 11, it is possible to implement the operation verification test efficiently and early since division of labor in units of the subsystems 21 is possible.

Moreover, because each of the subsystems 21-1 and 21-2 can be individually developed, it is easy to construct a development system of division of labor in which the subsystem 21 is a unit with respect to development of the control system 11, and thus it is possible to efficiently achieve early development.

However, in the divided type control system 11 illustrated in Fig. 1, in a case of a configuration in which both the first processing and the second processing can be implemented by only one of the processing units 32-1 and 32-2 on the basis of the sensing results of the sensors 31-1 and 31-2, two processing units 32 are provided although it is sufficient to have one processing unit, and there is a risk of increasing the device cost.

Furthermore, in a case where a failure occurs in any of the sensors 31-1 and 31-2, the corresponding processing units 232-1 and 32-2 cannot execute processing, and thus there is a possibility that normal processing in the entire processing implemented by the control system 11 cannot be implemented.

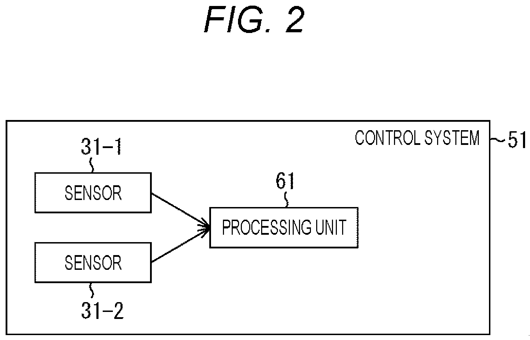

Accordingly, as illustrated in Fig. 2, there has been proposed a centralized control system 51 in which a processing unit 61 that integrally implements the first processing and the second processing in the processing units 32-1 and 32-2 described above using the sensing results of the sensors 31-1 and 31-2 is provided.

In the control system 51 of Fig. 2, the processing unit 61 is single, and two pieces of hardware such as the processing units 32-1 and 32-2 of Fig. 1 can be integrated into one piece, so that the cost of the hardware can be reduced.

However, in the control system 51 in Fig. 2, in a case where the processing unit 61 fails, both the first processing and the second processing cannot be performed normally.

Furthermore, in the case of the control system 51 of Fig. 2, when the safety test is performed, it is necessary to verify the entire control system 51, and the scale of the verification increases and becomes complicated as compared with the processing of performing the safety test using each of the subsystems 21-1 and 21-2 as a unit as in the control system 11 of Fig. 1.

Moreover, in the control system 11 of Fig. 1, it is possible to individually develop each of the subsystems 21-1 and 21-2, and it is possible to form a development system of division of labor. However, in the control system 51 of Fig. 2, since overall development is necessary, construction of the development system becomes complicated, and difficulty increases.

In view of the above, if it is possible to construct an intermediate control system of both the divided type control system 11 described above with reference to Fig. 1 and the centralized control system 51 described above with reference to Fig. 2 so as to have advantageous configurations and eliminate disadvantageous configurations of the both, it is possible to improve the stability of the operation of the control system 11.

For example, in the control system 11 in Fig. 1, a case will be considered in which the processing units 32-1 and 32-2 constituting the subsystems 21-1 and 21-2 can implement the first processing and the second processing, respectively, if the sensing result of at least one of the sensors 31-1 and 31-2 is acquired.

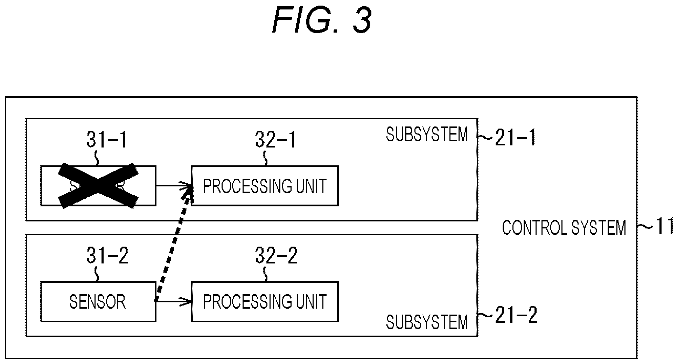

In this case, for example, when a failure occurs in the sensor 31-1 as indicated by a cross in Fig. 3, the processing unit 32-1 can continue the processing by acquiring the sensing result of the sensor 31-2 that is substitutable as indicated by a dotted arrow.

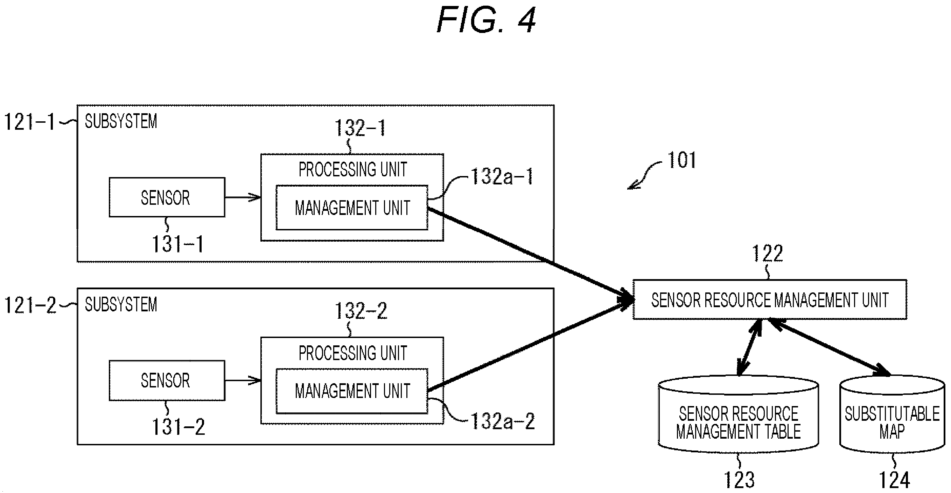

Therefore, in the present disclosure, in order to implement the processing as illustrated in Fig. 3, a control system illustrated in Fig. 4 is proposed which has advantageous configurations of both the divided type control system 11 and the centralized control system 51.

More particularly, a control system 101 of Fig. 4 includes subsystems 121-1 and 121-2, a sensor resource management unit 122, a sensor resource management table 123, and a substitutable map 124.

In the control system 101 of Fig. 4, the subsystems 121-1 and 121-2 have configurations corresponding to the subsystems 21-1 and 21-2 of Fig. 1, and the processing units 132-1 and 132-2 have configurations corresponding to the processing units 32-1 and 32-2 of Fig. 1. That is, each of the processing units 132-1 and 132-2 executes the first processing and the second processing on the basis of the respective sensing results of sensors 131-1 and 131-2.

The control system 101 implements processing needed for automated driving on the basis of each of the first processing result and the second processing result of the subsystems 121-1 and 121-2.

The processing units 132-1 and 132-2 execute processing of the processing units 32-1 and 32-2, and includes management units 132a-1 and 132a-2, respectively, for managing sensor resources.

The management units 132a-1 and 132a-2 supply, as sensor resource information, sensor types, data types, installation positions (sensing areas), measurement characteristics, and information serving as substitutable conditions of the sensors 131-1 and 131-2 to the sensor resource management unit 122, for example, when the vehicle or the like whose automated driving is controlled is activated.

Furthermore, the management units 132a-1 and 132a-2 detect occurrence of a failure or an abnormality of the sensors 131-1 and 131-2, respectively, and requests the sensor resource management unit 122 to transfer a substitutable sensing result from another subsystem 121 in a case where a malfunction is detected. Note that, hereinafter, other defects including failure and abnormality of the sensor 131 are also collectively referred to as a malfunction.

Moreover, on the basis of an instruction from the sensor resource management unit 122, the management units 132a-1 and 132a-2 transfer the sensing results of the sensors 131-1 and 131-2 respectively acquired to the management units 132a-1 and 132a-2 of the other subsystems 121-1 and 121-2 that can use the sensing results as substitutes.

Upon acquiring the sensor resource information supplied from the subsystems 121-1 and 121-2, the sensor resource management unit 122 registers the sensor resource information in the sensor resource management table 123.

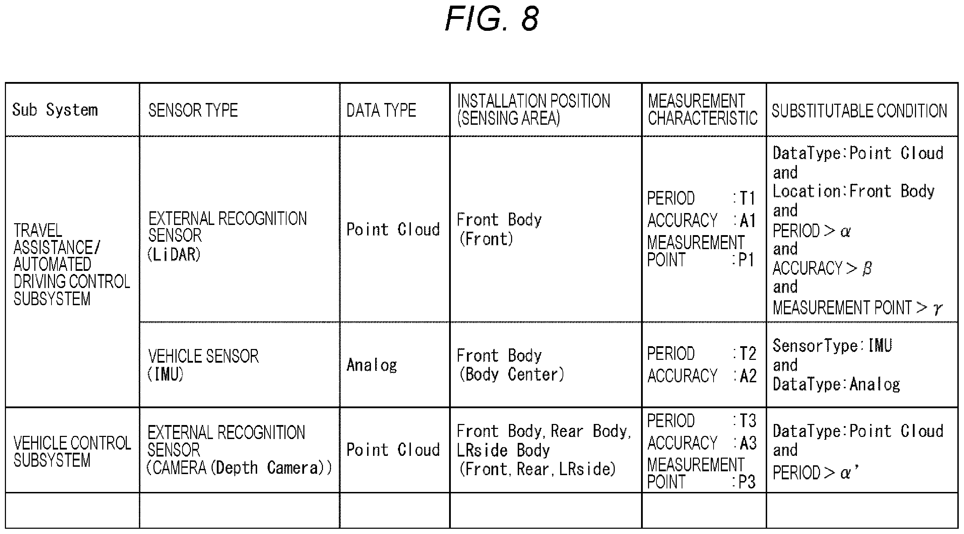

Note that the sensor resource management table 123 is similar to a sensor resource management table 291 to be described later, and details thereof will be described later with reference to Fig. 8.

Furthermore, the sensor resource management unit 122 reads the sensor resource information of each sensor from the sensor resource management table 123, sets sensors for detecting substitutable sensing results as a sensor pair between the subsystems 121, maps information of the sensors 131 as sensor pairs, and generates the substitutable map 124.

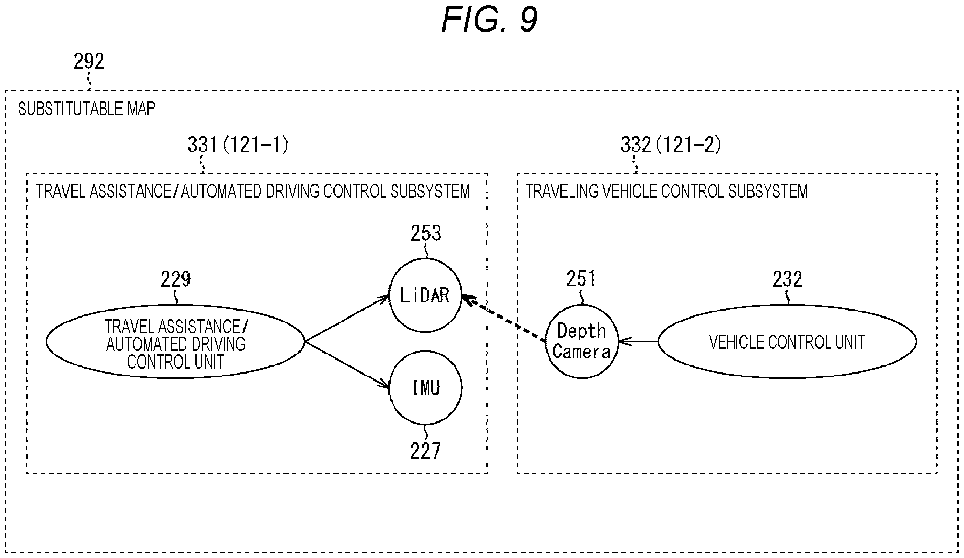

Note that the substitutable map 124 will be described later in detail as a substitutable map 292 described later with reference to Fig. 9.

Then, in a case where there is a transfer request for a substitutable sensing result caused by occurrence of a failure of the sensor 131 from the subsystem 121, the sensor resource management unit 122 refers to the substitutable map 124 and searches for another subsystem 121 capable of transferring the substitutable sensing result to the requested subsystem 121.

The sensor resource management unit 122 causes the other searched subsystem 121 to transfer the sensing result to the subsystem 121 that has requested the substitutable sensing result.

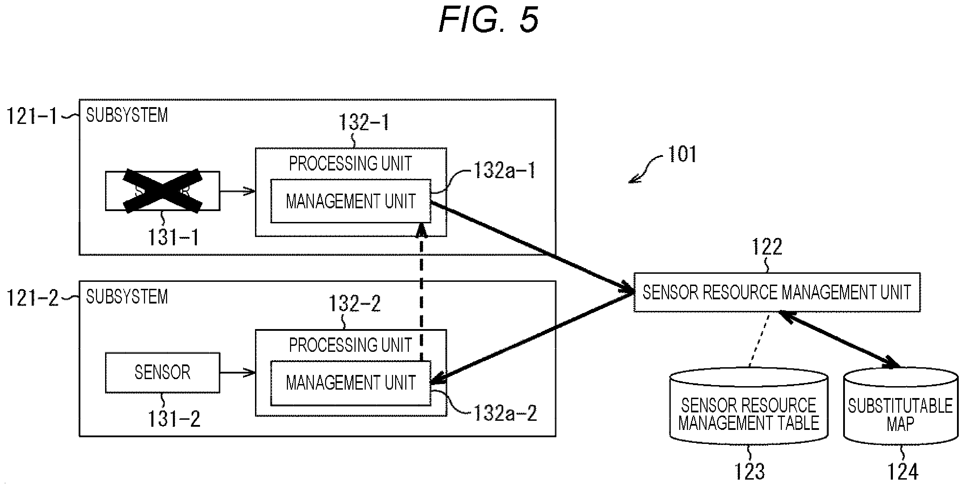

The flow of the series of processing is, for example, as illustrated in Fig. 5. Note that, in Fig. 5, a case where a failure occurs in the sensor 131-1 as indicated by a cross in the subsystem 121-1 will be considered.

In such a case, since a failure has occurred in the sensor 131-1, the management unit 132a-1 of the processing unit 132-1 in the subsystem 121-1 notifies the sensor resource management unit 122 of a transfer request for a sensing result of another substitutable sensor 131.

The sensor resource management unit 122 refers to the substitutable map 124 generated on the basis of the sensor resource management table 123, and specifies the subsystem 121 including the sensor 131 that outputs the sensing result that corresponds to the sensing result of the sensor 131-1 of the subsystem 121-1 that has made the request and can be substituted in the processing unit 132-1.

Here, a case is considered in which the subsystem 121 including the sensor 131 that outputs a sensing result that is substitutable in the processing unit 132-1 and corresponds to the sensing result of the sensor 131-1 of the subsystem 121-1 is, for example, the subsystem 121-2. In this case, the sensor resource management unit 122 transmits, to the management unit 132a-2 of the processing unit 132-2 in the specified subsystem 121-2, a transfer instruction to transfer the sensing result of the sensor 131-2 to the subsystem 121-1 that has made the transfer request.

Upon acquiring the transfer instruction from the sensor resource management unit 122, the management unit 132a-2 transfers the sensing result of the sensor 131-2 to the subsystem 121-1 that has made the request as indicated by a dotted arrow.

With the above configuration, in the subsystem 121-1 in which the failure has occurred in the sensor 131-1, the sensing result of the sensor 131-2 that is substitutable for the sensing result of the sensor 131-1 is supplied from the subsystem 121-2.

Thus, the processing unit 132-1 can continuously execute the first processing on the basis of the sensing result transferred from the subsystem 121-2 even in a state where the sensor 131-1 has failed.

Note that, although an example in which a failure has occurred in the sensor 131-1 has been described above, in a case where a failure has occurred in the sensor 131-2, when the sensing result of the sensor 131-2 is also substitutable in the subsystem 121-2, the management unit 132a-1 of the processing unit 132-1 in the subsystem 121-1 transfers the sensing result of the sensor 131-1 to the subsystem 121-2.

Thus, the processing unit 132-2 can continuously execute the second processing on the basis of the sensing result transferred from the subsystem 121-1 even in a state where the sensor 131-2 has failed.

In any case, as a result, even if a failure occurs in the sensor 131 in the control system 101, the control system 101 can continue processing necessary for automated driving as a whole.

Furthermore, in a state where no failure has occurred in the sensor 131, that is, in a normal state, no sensing result is transferred to another subsystem 121. Thus, as long as the sensor 131 operates normally, transfer of an unnecessary sensing result is not transferred and is not distributed in the control system 101, and therefore there is no increase in an unnecessary load related to transfer of the sensing result. Thus, the entire operation of the control system 101 is not made unstable due to an increase in the transfer of the sensing result.

Note that, in Fig. 5, an example has been described in which one sensor resource management unit 122 is provided for two subsystems 121, but three or more subsystems 121 may be provided. However, in this case, in a case where the number of the subsystems 121 is 10, 20, or more, if the number of the sensor resource management units 122 is one, the operation of the control system 101 is disabled if a malfunction occurs in one sensor resource management unit 122.

Accordingly, a plurality of sensor resource management units 122 may be configured for a plurality of subsystems 121 to cope with a malfunction in the sensor resource management unit 122. However, it is excessive if the same number of the sensor resource management units 122 are provided for the plurality of subsystems 121, the number of the sensor resource management units 122 needs to correspond to the number of the subsystems 121. That is, for example, two or three sensor resource management units 122 are provided for 10 subsystems 121. Therefore, when the number of subsystems 121 is, for example, 100, the sensor resource management units 122 may be provided at a similar ratio, for example, about 20 to 30.

Furthermore, the number of subsystems 121 and the number of sensor resource management units 122 may correspond to the importance of processing implemented by the control system 101.

For example, accuracy may be sacrificed to some extent, and the number of the sensor resource management units 122 may be smaller than the number of the subsystems 121 when processing that does not require severe safety or the like is performed. In such a case, for example, about two to three sensor resource management units 122 may be provided for 20 subsystems.

On the contrary, when the importance of the processing implemented by the control system 101 is high and, for example, processing having severe requirements on safety or the like is performed, the number of the sensor resource management units 122 is made larger than the number of the subsystems 121. In such a case, for example, about 5 to 10 sensor resource management units 122 may be provided for 20 subsystems.

### <Configuration example of vehicle control system>

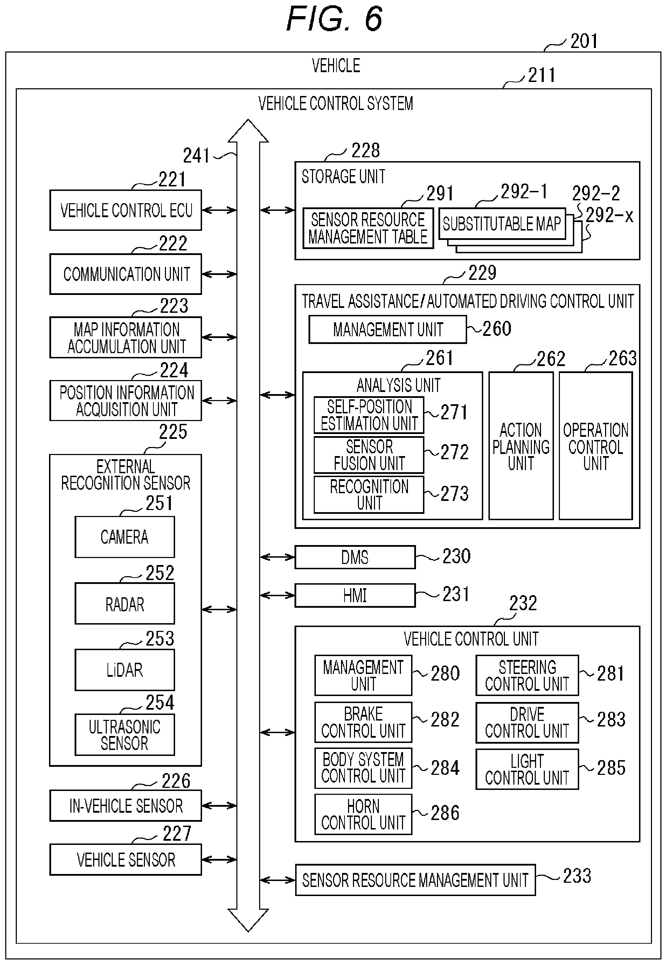

Fig. 6 is a block diagram illustrating a configuration example of a vehicle control system 211 that is an example of a mobile device control system to which the present technology is applied.

The vehicle control system 211 is provided in the vehicle 201 and performs processing related to travel assistance and automated driving of the vehicle 201.

The vehicle control system 211 includes a vehicle control electronic control unit (ECU) 221, a communication unit 222, a map information accumulation unit 223, a position information acquisition unit 224, an external recognition sensor 225, an in-vehicle sensor 226, a vehicle sensor 227, a storage unit 228, a travel assistance/automated driving control unit 229, a driver monitoring system (DMS) 230, a human machine interface (HMI) 231, a vehicle control unit 232, and a sensor resource management unit 233.

The vehicle control ECU 221, the communication unit 222, the map information accumulation unit 223, the position information acquisition unit 224, the external recognition sensor 225, the in-vehicle sensor 226, the vehicle sensor 227, the storage unit 228, the travel assistance/automated driving control unit 229, the driver monitoring system (DMS) 230, the human machine interface (HMI) 231, and the vehicle control unit 232 are communicably connected to each other via a communication network 241. The communication network 241 includes, for example, an in-vehicle communication network, a bus, or the like that conforms to a digital bidirectional communication standard, such as a controller area network (CAN), a local interconnect network (LIN), a local area network (LAN), FlexRay (registered trademark), or Ethernet (registered trademark). The communication network 241 may be selectively used depending on the type of data to be transmitted. For example, the CAN may be applied to data related to vehicle control, and the Ethernet may be applied to large-volume data. Note that, units of the vehicle control system 211 may be directly connected to each other using wireless communication adapted to a relatively short-range communication, such as near field communication (NFC) or Bluetooth (registered trademark) without using the communication network 241.

Note that, hereinafter, in a case where each unit of the vehicle control system 211 performs communication via the communication network 241, the description of the communication network 241 will be omitted. For example, in a case where the vehicle control ECU 221 and the communication unit 222 perform communication via the communication network 241, it will be simply described that the vehicle control ECU 221 and the communication unit 222 perform communication.

For example, the vehicle control ECU 221 includes various processors such as a central processing unit (CPU) and a micro processing unit (MPU). The vehicle control ECU 221 controls all or some of the functions of the vehicle control system 211.

The communication unit 222 communicates with various devices inside and outside the vehicle, another vehicle, a server, a base station, and the like, and transmits and receives various data. At that time, the communication unit 222 can perform communication using a plurality of communication methods.

Communication with the outside of the vehicle executable by the communication unit 222 will be schematically described. The communication unit 222 communicates with a server (hereinafter, referred to as an external server) or the like that exists on an external network via a base station or an access point by, for example, a wireless communication method such as fifth generation mobile communication system (5G), long term evolution (LTE), dedicated short range communications (DSRC), or the like. Examples of the external network with which the communication unit 222 performs communication include the Internet, a cloud network, a company-specific network, or the like. A communication method performed between the communication unit 222 and the external network is not limited to any particular method that is a wireless communication method capable of digital bidirectional communication between objects at a predetermined distance or longer from each other and at a communication speed of a predetermined speed or higher.

Furthermore, for example, the communication unit 222 can communicate with a terminal existing in the vicinity of the host vehicle using a peer to peer (P2P) technology. The terminal present in the vicinity of the host vehicle is, for example, a terminal attached to a moving body moving at a relatively low speed such as a pedestrian or a bicycle, a terminal fixedly installed in a store or the like, or a machine type communication (MTC) terminal. Furthermore, the communication unit 222 can also perform V2X communication. The V2X communication refers to, for example, communication between the host vehicle and another vehicle, such as vehicle to vehicle communication with another vehicle, vehicle to infrastructure communication with a roadside device or the like, vehicle to home communication, and vehicle to pedestrian communication with a terminal or the like carried by a pedestrian.

For example, the communication unit 222 can receive a program for updating software for controlling the operation of the vehicle control system 211 from the outside (Over The Air). The communication unit 222 can further receive map information, traffic information, the information regarding the surroundings of the vehicle 201, or the like from the outside. Furthermore, for example, the communication unit 222 can transmit information regarding the vehicle 201, information regarding the surroundings of the vehicle 201, and the like to the outside. Examples of the information regarding the vehicle 201 transmitted to the outside by the communication unit 222 include data indicating a state of the vehicle 201, a recognition result from a recognition unit 273, or the like. Moreover, for example, the communication unit 222 performs communication corresponding to a vehicle emergency call system such as an eCall.

For example, the communication unit 222 receives an electromagnetic wave transmitted by a road traffic information communication system (vehicle information and communication system (VICS) (registered trademark)), such as a radio wave beacon, an optical beacon, or FM multiplex broadcasting.

Communication with the inside of the vehicle executable by the communication unit 222 will be schematically described. The communication unit 222 can communicate with each device in the vehicle using, for example, wireless communication. The communication unit 222 can perform wireless communication with the device in the vehicle by, for example, a communication method allowing digital bidirectional communication at a communication speed equal to or higher than a predetermined speed by wireless communication, such as wireless LAN, Bluetooth, NFC, or wireless USB (WUSB). Communication performed by the communication unit 222 is not limited to wireless communication, and the communication unit 222 can also communicate with each device in the vehicle using wired communication. For example, the communication unit 222 can communicate with each device in the vehicle by wired communication via a cable connected to a connection terminal (not illustrated). The communication unit 222 can communicate with each device in the vehicle by a communication method allowing digital bidirectional communication at a communication speed equal to or higher than a predetermined speed by wired communication, such as universal serial bus (USB), high-definition multimedia interface (HDMI) (registered trademark), or mobile high-definition link (MHL).

Here, the device in the vehicle refers to, for example, a device that is not connected to the communication network 241 in the vehicle. As the device in the vehicle, for example, a mobile device or a wearable device carried by an occupant such as a driver or the like, an information device brought into the vehicle and temporarily installed, or the like is assumed.

The map information accumulation unit 223 accumulates one or both of a map acquired from the outside and a map created by the vehicle 201. For example, the map information accumulation unit 223 accumulates a three-dimensional high-precision map, a global map that is lower in precision than the high-precision map but covers a wider area, and the like.

The high-precision map is, for example, a dynamic map, a point cloud map, a vector map, or the like. The dynamic map is, for example, a map including four layers of dynamic information, semi-dynamic information, semi-static information, and static information, and is provided to the vehicle 201 from an external server or the like. The point cloud map is a map including a point cloud (point cloud data). The vector map is, for example, a map in which traffic information such as a lane and a position of a traffic light is associated with a point cloud map and adapted to an advanced driver assistance system (ADAS) or autonomous driving (AD).

The point cloud map and the vector map may be provided from, for example, the external server or the like, or may be created in the vehicle 201 as a map for performing matching with a local map to be described later on the basis of a result of sensing by a camera 251, a radar 252, a LiDAR 253, or the like, and may be accumulated in the map information accumulation unit 223. Furthermore, in a case where a high-precision map is provided from the external server or the like, for example, map data of several hundred meters square regarding a planned route on which the vehicle 201 will travel is acquired from the external server or the like in order to reduce the communication capacity.

The position information acquisition unit 224 receives a global navigation satellite system (GNSS) signal from a GNSS satellite, and acquires position information of the vehicle 201. The acquired position information is supplied to the travel assistance/automated driving control unit 229. Note that the position information acquisition unit 224 may acquire position information, for example, using a beacon, not limited to the method using the GNSS signal.

The external recognition sensor 225 includes various sensors used for recognizing a situation outside the vehicle 201, and supplies sensor data from each sensor to each unit of the vehicle control system 211. The type and number of sensors included in the external recognition sensor 225 may be determined as desired.

For example, the external recognition sensor 225 includes the camera 251, the radar 252, the light detection and ranging or laser imaging detection and ranging sensor (LiDAR) 253, and an ultrasonic sensor 254. It is not limited thereto, and the external recognition sensor 225 may include one or more types of sensors among the camera 251, the radar 252, the LiDAR 253, and the ultrasonic sensor 254. The numbers of the cameras 251, the radars 252, the LiDAR 253, and the ultrasonic sensors 254 are not particularly limited as long as they can be practically installed in the vehicle 201. Furthermore, the types of sensors included in the external recognition sensor 225 are not limited to this example, and the external recognition sensor 225 may include other type of sensors. An example of the sensing region of each sensor included in the external recognition sensor 225 will be described later.

Note that an imaging method of the camera 251 is not particularly limited. For example, cameras of various imaging methods such as a time-of-flight (ToF) camera, a stereo camera, a monocular camera, and an infrared camera, which are imaging methods capable of distance measurement, can be applied to the camera 251 as necessary. It is not limited thereto, and the camera 251 may simply acquire a captured image regardless of distance measurement.

Furthermore, for example, the external recognition sensor 225 can include an environment sensor for detecting an environment for the vehicle 201. The environment sensor is a sensor for detecting an environment such as weather, climate, or brightness, and can include various sensors such as a raindrop sensor, a fog sensor, a sunshine sensor, a snow sensor, and an illuminance sensor, for example.

Moreover, for example, the external recognition sensor 225 includes a microphone used for detecting a sound around the vehicle 201, a position of a sound source, and the like.

The in-vehicle sensor 226 includes various sensors for detecting information inside the vehicle, and supplies sensor data from each sensor to each unit of the vehicle control system 211. The type and number of various sensors included in the in-vehicle sensor 226 are not particularly limited as long as they are types and numbers that can be practically installed in the vehicle 201.

For example, the in-vehicle sensor 226 can include one or more sensors of a camera, a radar, a seating sensor, a steering wheel sensor, a microphone, and a biological sensor. As the camera included in the in-vehicle sensor 226, for example, cameras of various imaging methods capable of measuring a distance, such as a ToF camera, a stereo camera, a monocular camera, and an infrared camera, can be used. It is not limited thereto, and the camera included in the in-vehicle sensor 226 may simply acquire a captured image regardless of distance measurement. The biosensor included in the in-vehicle sensor 226 is provided, for example, on a seat, a steering wheel, or the like, and detects various kinds of biological information about an occupant such as a driver.

The vehicle sensor 227 includes various sensors for detecting the state of the vehicle 201, and supplies sensor data from each sensor to each unit of the vehicle control system 211. The type and number of various sensors included in the vehicle sensor 227 are not particularly limited as long as they are types and numbers that can be practically installed in the vehicle 201.

For example, the vehicle sensor 227 includes a speed sensor, an acceleration sensor, an angular velocity sensor (gyro sensor), and an inertial measurement unit (IMU) integrating these sensors. For example, the vehicle sensor 227 includes a steering angle sensor that detects a steering angle of a steering wheel, a yaw rate sensor, an accelerator sensor that detects an operation amount of an accelerator pedal, and a brake sensor that detects an operation amount of a brake pedal. For example, the vehicle sensor 227 includes a rotation sensor that detects the number of rotations of an engine or a motor, an air pressure sensor that detects the air pressure of a tire, a slip rate sensor that detects the slip rate of the tire, and a wheel speed sensor that detects the rotation speed of a wheel. For example, the vehicle sensor 227 includes a battery sensor that detects the state of charge and temperature of a battery, and an impact sensor that detects an external impact.

The storage unit 228 includes at least one of a nonvolatile storage medium or a volatile storage medium, and stores data and a program. The storage unit 228 is used as, for example, an electrically erasable programmable read only memory (EEPROM) and a random access memory (RAM), and a magnetic storage device such as a hard disc drive (HDD), a semiconductor storage device, an optical storage device, and a magneto-optical storage device can be applied as a storage medium. The storage unit 228 stores various programs and data used by each unit of the vehicle control system 211. For example, the storage unit 228 includes an event data recorder (EDR) and a data storage system for automated driving (DSSAD), and stores therein information about the vehicle 201 before and after an event such as an accident and information acquired by the in-vehicle sensor 226.

Furthermore, the storage unit 228 stores the sensor resource management table 291 and substitutable maps 292-1 to 292-x. The sensor resource management table 291 and the substitutable map 292 are configurations corresponding to the sensor resource management table 123 and the substitutable map 124 described with reference to Figs. 4 and 5, respectively. Note that details of the sensor resource management table 291 and the substitutable map 292 will be described later in detail with reference to Figs. 8 and 9.

The travel assistance/automated driving control unit 229 controls travel assistance and automated driving of the vehicle 201. For example, the travel assistance/automated driving control unit 229 includes a management unit 260, an analysis unit 261, an action planning unit 262, and an operation control unit 263.

The management unit 260 is a configuration corresponding to the management unit 132a-1 described with reference to Figs. 4 and 5, and supplies sensor resource information of a sensor needed for causing a subsystem managed by the management unit among the external recognition sensor 225, the in-vehicle sensor 226, and the vehicle sensor 227 to function to the sensor resource management unit 233.

The management unit 260 detects the presence or absence of a failure of one of the external recognition sensor 225, the in-vehicle sensor 226, and the vehicle sensor 227 that is used when a function implemented by the travel assistance/automated driving control unit 229 is caused to function as a subsystem.

In a case where a failure of the sensor to be used is detected, the management unit 260 requests the sensor resource management unit 233 to transfer a substitutable sensing result from another subsystem.

Hereinafter, in order to simplify the description, it is assumed that the travel assistance/automated driving control unit 229 and the vehicle control unit 232 are configurations corresponding to the processing units 132-1 and 132-2, respectively. Then, it is assumed that the subsystems in which the travel assistance/automated driving control unit 229 and the vehicle control unit 232 function as the processing units 132-1 and 132-2, respectively, are the subsystems 121-1 and 121-2 in Figs. 4 and 5.

Here, in the subsystem 121-1 that causes the travel assistance/automated driving control unit 229 to function as the processing unit 132-1, the external recognition sensor 225 and the vehicle sensor 227 correspond to the sensor 131-1.

Furthermore, in the subsystem 121-2 that causes the vehicle control unit 232 to function as the processing unit 132-2, the in-vehicle sensor 226 corresponds to the sensor 131-2.

That is, in the subsystem 121-1 that causes the travel assistance/automated driving control unit 229 to function as the processing unit 132-1, the travel assistance/automated driving control unit 229 controls the travel assistance and the automated driving on the basis of the sensing results of the external recognition sensor 225 and the vehicle sensor 227 corresponding to the sensor 131-1.

Furthermore, in the subsystem 121-2 that causes the vehicle control unit 232 to function as the processing unit 132-2, the vehicle control unit 232 controls the vehicle 201 on the basis of the sensing result of the in-vehicle sensor 226 corresponding to the sensor 131-2.

The management unit 260 detects the presence or absence of a failure of the external recognition sensor 225 and the vehicle sensor 227 corresponding to the sensor 131-1 when the travel assistance/automated driving control unit 229 is caused to function as the processing unit 132-1 of the subsystem 121-1.

Then, in a case where a failure of the external recognition sensor 225 and the vehicle sensor 227 is detected, the management unit 260 requests the sensor resource management unit 233 to transfer a substitutable sensing result from another subsystem (here, a subsystem corresponding to the subsystem 121-2 implemented by the vehicle control unit 232).

In response to a request to the sensor resource management unit 233, the management unit 260 acquires a substitutable sensing result supplied from a management unit (here, the management unit 280 corresponding to the management unit 132a-2) constituting another subsystem (here, the subsystem corresponding to the subsystem 121-2 implemented by the vehicle control unit 232), and causes the travel assistance/automated driving control unit 229 to function as the processing unit 132-1.

In response to a transfer instruction from the sensor resource management unit 233, the management unit 260 causes the management unit (here, the management unit 280 corresponding to the management unit 132a-2) constituting another subsystem (here, the subsystem 121-2 implemented by the vehicle control unit 232) to transfer the sensing result acquired by itself.

The analysis unit 261 performs analysis processing of the vehicle 201 and the surrounding situation. The analysis unit 261 includes a self-position estimation unit 271, a sensor fusion unit 272, and the recognition unit 273.

The self-position estimation unit 271 estimates the self-position of the vehicle 201 on the basis of the sensor data from the external recognition sensor 225 and the high-precision map accumulated in the map information accumulation unit 223. For example, the self-position estimation unit 271 generates a local map on the basis of sensor data from the external recognition sensor 225, and estimates the self-position of the vehicle 201 by matching the local map with the high-precision map. The position of the vehicle 201 is based on, for example, the center of a rear-wheel axle.

The local map is, for example, a three-dimensional high-precision map created using a technology such as simultaneous localization and mapping (SLAM), an occupancy grid map, or the like. The three-dimensional high-precision map is, for example, the above-described point cloud map or the like. The occupancy grid map is a map in which a three-dimensional or two-dimensional space around the vehicle 201 is divided into grids (lattices) with a predetermined size, and an occupancy state of an object is represented in units of grids. The occupancy state of the object is represented by, for example, presence or absence or an existence probability of the object. The local map is also used for detection processing and recognition processing of the situation outside the vehicle 201 by the recognition unit 273, for example.

Note that the self-position estimation unit 271 may estimate the self-position of the vehicle 201 on the basis of the position information acquired by the position information acquisition unit 224 and the sensor data from the vehicle sensor 227.

The sensor fusion unit 272 performs sensor fusion processing of combining a plurality of different types of sensor data (for example, image data supplied from the camera 251 and sensor data supplied from the radar 252) to obtain new information. Methods for combining different types of sensor data include integration, fusion, association, or the like.

The recognition unit 273 executes detection processing for detecting a situation outside the vehicle 201 and recognition processing for recognizing a situation outside the vehicle 201.

For example, the recognition unit 273 performs detection processing and recognition processing of a situation outside the vehicle 201 on the basis of information from the external recognition sensor 225, information from the self-position estimation unit 271, information from the sensor fusion unit 272, and the like.

Specifically, for example, the recognition unit 273 performs detection processing, recognition processing, and the like of an object around the vehicle 201. The object detection processing is, for example, processing for detecting presence or absence, size, shape, position, motion, or the like of an object. The object recognition processing is, for example, processing for recognizing an attribute such as a type of an object or identifying a specific object. The detection processing and the recognition processing, however, are not necessarily clearly separated and may overlap.

For example, the recognition unit 273 detects an object around the vehicle 201 by performing clustering to classify point clouds based on sensor data by the radar 252, the LiDAR 253, or the like into clusters of point clouds. Thus, the presence or absence, size, shape, and position of an object around the vehicle 201 are detected.

For example, the recognition unit 273 detects the motion of the object around the vehicle 201 by performing tracking that follows the motion of the mass of the point cloud classified by clustering. Thus, the speed and the traveling direction (movement vector) of the object around the vehicle 201 are detected.

For example, the recognition unit 273 detects or recognizes a vehicle, a person, a bicycle, an obstacle, a structure, a road, a traffic light, a traffic sign, a road sign, and the like on the basis of the image data supplied from the camera 251. Furthermore, the recognition unit 273 may recognize the type of the object around the vehicle 201 by performing recognition processing such as semantic segmentation.

For example, the recognition unit 273 can perform recognition processing of traffic rules around the vehicle 201 on the basis of a map accumulated in the map information accumulation unit 223, an estimation result of the self position by the self-position estimation unit 271, and a recognition result of an object around the vehicle 201 by the recognition unit 273. Through this process, the recognition unit 273 can recognize the position and the state of the traffic light, the contents of the traffic sign and the road marking, the contents of the traffic regulation, the travelable lane, and the like.

For example, the recognition unit 273 can perform recognition processing of the environment around the vehicle 201. As the surrounding environment to be recognized by the recognition unit 273, weather, temperature, humidity, brightness, road surface conditions, and the like are assumed.

The action planning unit 262 creates an action plan for the vehicle 201. For example, the action planning unit 262 creates the action plan by performing processing of path planning and path following.

Note that global path planning (global path planning) is processing for planning a rough path from a start to a goal. The path planning includes processing of performing track generation (local path planning) called a track planning that enables safe and smooth traveling in the vicinity of the vehicle 201 in consideration of the motion characteristics of the vehicle 201 in the planned path.

The path following is processing of planning an operation for safely and accurately traveling a path planned by the path planning within a planned time. For example, the action planning unit 262 can calculate a target speed and a target angular velocity of the vehicle 201 on the basis of a result of the path following processing.

The operation control unit 263 controls the operation of the vehicle 201 in order to implement the action plan created by the action planning unit 262.

For example, the operation control unit 263 controls a steering control unit 281, a brake control unit 282, and a drive control unit 283 included in the vehicle control unit 232 described later, and performs acceleration/deceleration control and direction control so that the vehicle 201 travels on the track calculated by the track plan. For example, the operation control unit 263 performs cooperative control for the purpose of implementing the functions of the ADAS such as collision avoidance or impact mitigation, follow-up traveling, vehicle speed maintaining traveling, collision warning of the host vehicle, lane deviation warning of the host vehicle, and the like. For example, the operation control unit 263 performs cooperative control for the purpose of automated driving or the like in which a vehicle autonomously travels without depending on an operation of a driver.

The DMS 230 performs authentication processing of a driver, recognition processing of a state of the driver, and the like on the basis of sensor data from the in-vehicle sensor 226, input data input to the HMI 231 to be described later, and the like. As the state of the driver to be recognized, for example, a physical condition, an alertness level, a concentration level, a fatigue level, a line-of-sight direction, a drunkenness level, a driving operation, a posture, and the like are assumed.

Note that the DMS 230 may perform authentication processing of an occupant other than the driver and recognition processing of the state of the occupant. Furthermore, for example, the DMS 230 may perform recognition processing of the situation inside the vehicle on the basis of sensor data from the in-vehicle sensor 226. As the situation in the vehicle to be recognized, for example, a temperature, a humidity, brightness, odor, or the like are assumed.

The HMI 231 inputs various data, instructions, and the like, and presents various data to the driver and the like.

The input of data by the HMI 231 will be schematically described. The HMI 231 includes an input device for a person to input data. The HMI 231 generates an input signal on the basis of data, an instruction, or the like input by the input device, and supplies the input signal to each unit of the vehicle control system 211. The HMI 231 includes, for example, an operation element such as a touch panel, a button, a switch, and a lever as the input device. It is not limited thereto, and the HMI 231 may further include an input device capable of inputting information by a method such as voice, gesture, or the like other than manual operation. Moreover, the HMI 231 may use, for example, a remote control device using infrared rays or radio waves, or an external connection device such as a mobile device or a wearable device adapted to the operation of the vehicle control system 211 as the input device.

Presentation of data by the HMI 231 will be schematically described. The HMI 231 generates visual information, auditory information, and haptic information regarding an occupant or the outside of the vehicle. Furthermore, the HMI 231 performs output control for controlling the output, output content, output timing, output method, and the like of each piece of generated information. The HMI 231 generates and outputs, as the visual information, an operation screen, a state display of the vehicle 201, a warning display, an image such as a monitor image indicating a situation around the vehicle 201, and information indicated by light, for example. Furthermore, the HMI 231 generates and outputs, as the auditory information, information indicated by sounds such as voice guidance, a warning sound, and a warning message, for example. Moreover, the HMI 231 generates and outputs, for example, information given to the sense of touch of an occupant through force, vibration, motion, or the like, as haptic information.

As an output device that the HMI 231 outputs the visual information, for example, a display device that presents the visual information by displaying an image by itself or a projector device that presents the visual information by projecting an image can be applied. Note that the display device may be a device that displays the visual information in the field of view of the occupant, such as a head-up display, a transmissive display, or a wearable device having an augmented reality (AR) function, for example, in addition to a display device having an ordinary display. Furthermore, in the HMI 231, a display device included in a navigation device, an instrument panel, a camera monitoring system (CMS), an electronic mirror, a lamp, or the like provided in the vehicle 201 can also be used as the output device that outputs the visual information.

As an output device with which the HMI 231 outputs the auditory information, for example, an audio speaker, a headphone, or an earphone can be applied.

As an output device to which the HMI 231 outputs the haptic information, for example, a haptic element using a haptic technology can be applied. The haptic element is provided, for example, at a portion to be touched by an occupant of the vehicle 201, such as a steering wheel or a seat.

The vehicle control unit 232 controls each unit of the vehicle 201. The vehicle control unit 232 includes the management unit 280, the steering control unit 281, the brake control unit 282, the drive control unit 283, a body system control unit 284, a light control unit 285, and a horn control unit 286.

The management unit 280 is a configuration corresponding to the management unit 132a-2 described with reference to Figs. 4 and 5, and supplies sensor resource information of a sensor used in a subsystem in which the sensor itself implements a function among the external recognition sensor 225, the in-vehicle sensor 226, and the vehicle sensor 227 to the sensor resource management unit 233.

The management unit 280 detects the presence or absence of a failure of one of the external recognition sensor 225, the in-vehicle sensor 226, and the vehicle sensor 227 that is used when a function implemented by the vehicle control unit 232 is caused to function as a subsystem.

Then, in a case where a failure of the sensor to be used is detected, the management unit 280 requests the sensor resource management unit 233 to transfer a substitutable sensing result from another subsystem.

The management unit 280 detects the presence or absence of a failure of the in-vehicle sensor 226 corresponding to the sensor 131-2 when the vehicle control unit 232 is caused to function as the processing unit 132-2 of the subsystem 121-2.

Then, in a case where a failure of the in-vehicle sensor 226 is detected, the management unit 280 requests the sensor resource management unit 233 to transfer a substitutable sensing result from another subsystem (here, the subsystem 121-1 implemented by the travel assistance/automated driving control unit 229).

In response to a request to the sensor resource management unit 233, the management unit 280 acquires a substitutable sensing result supplied from a management unit (here, the management unit 260 corresponding to the management unit 132a-1) constituting another subsystem (here, the subsystem 121-1 implemented by the travel assistance/automated driving control unit 229), and causes the vehicle control unit 232 to function as the processing unit 132-2.

In response to a transfer instruction from the sensor resource management unit 233, the management unit 280 causes a management unit (here, the management unit 260 corresponding to the management unit 132a-1) constituting another subsystem (here, the subsystem 121-1 implemented by the travel assistance/automated driving control unit 229) to transfer the sensing result acquired by itself.

The steering control unit 281 performs detection, control, and the like of a state of a steering system of the vehicle 201. The steering system includes, for example, a steering mechanism including a steering wheel or the like, an electric power steering, or the like. The steering control unit 281 includes, for example, a steering ECU that controls a steering system, an actuator that drives the steering system, and the like.

The brake control unit 282 performs detection, control, and the like of a state of a brake system of the vehicle 201. The brake system includes, for example, a brake mechanism including a brake pedal or the like, an antilock brake system (ABS), a regenerative brake mechanism, or the like. The brake control unit 282 includes, for example, a brake ECU that controls the brake system, an actuator that drives the brake system, and the like.

The drive control unit 283 performs detection, control, and the like of a state of a drive system of the vehicle 201. The drive system includes, for example, an accelerator pedal, a driving force generation device for generating a driving force such as an internal combustion engine or a driving motor, a driving force transmission mechanism for transmitting the driving force to wheels, or the like. The drive control unit 283 includes, for example, a drive ECU that controls the drive system, an actuator that drives the drive system, and the like.

The body system control unit 284 performs detection, control, and the like of a state of a body system of the vehicle 201. The body system includes, for example, a keyless entry system, a smart key system, a power window device, a power seat, an air conditioner, an airbag, a seat belt, a shift lever, or the like. The body system control unit 284 includes, for example, a body system ECU that controls the body system, an actuator that drives the body system, and the like.

The light control unit 285 performs detection, control, and the like of states of various lights of the vehicle 201. As the lights to be controlled, for example, a headlight, a backlight, a fog light, a turn signal, a brake light, a projection light, a bumper indicator, or the like can be considered. The light control unit 285 includes a light ECU that controls the lights, an actuator that drives the lights, and the like.

The horn control unit 286 performs detection, control, and the like of a state of a car horn of the vehicle 201. The horn control unit 286 includes, for example, a horn ECU that controls a car horn, an actuator that drives the car horn, and the like.

The sensor resource management unit 233 is a configuration corresponding to the sensor resource management unit 122 in Figs. 4 and 5, acquires sensor resource information of a sensor that supplies sensing results to be used by each of the management units 260 and 280 constituting the subsystem, generates the sensor resource management table 291, and stores the sensor resource information in the storage unit 228.

The sensor resource management unit 233 reads the sensor resource management table 291, generates the substitutable map 292 indicating information of a pair of sensors (hereinafter, also referred to as a sensor pair) capable of acquiring substitutable sensing results between different subsystems, and stores the substitutable map in the storage unit 228 for each sensor pair. Note that the substitutable maps 292-1 to 292-x in the storage unit 228 indicate that the substitutable map 292 is generated for every x sensor pairs.

The sensor resource management unit 233 searches for the substitutable maps 292-1 to 292-x upon receiving a request to transfer a substitutable sensing result from another subsystem because a failure has occurred in the sensor that supplies the sensing result used by itself from the management units 260 and 280 constituting the subsystem, and searches for the substitutable map 292 of a sensor pair with a sensor capable of acquiring a sensing result that is substitutable for the sensing result of the sensor in which the failure has occurred.

On the basis of the information of the substitutable map 292 that has been searched for, the sensor resource management unit 233 transmits a transfer request for requesting another subsystem that has acquired a sensing result that is substitutable for the sensing result used in the subsystem that has notified that the sensor has failed to transfer the acquired sensing result to the subsystem in which the failure has occurred, and transfers the substitutable sensing result.

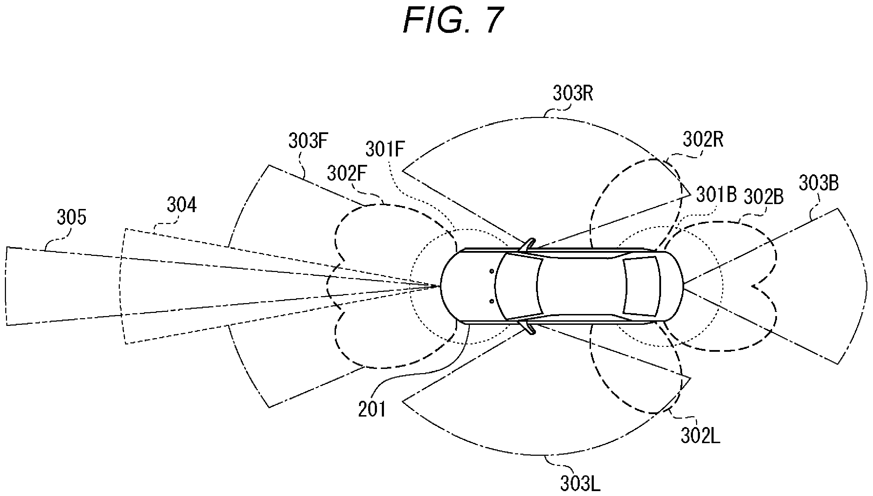

Fig. 7 is a diagram depicting examples of sensing regions of the camera 251, the radar 252, the LiDAR 253, the ultrasonic sensor 254, and the like of the external recognition sensor 225 in Fig. 6. Note that, Fig. 7 schematically depicts the vehicle 201 as viewed from above, where a left end side is the front end (front) side of the vehicle 201 and a right end side is the rear end (rear) side of the vehicle 201.

Sensing regions 301F and 301B illustrate examples of sensing regions of the ultrasonic sensor 254. The sensing region 301F covers the periphery of the front end of the vehicle 201 by the plurality of ultrasonic sensors 254. The sensing region 301B covers the periphery of the rear end of the vehicle 201 by the plurality of ultrasonic sensors 254.

Sensing results in the sensing region 301F and the sensing region 301B are used for, for example, parking assistance and the like of the vehicle 201.

Sensing regions 302F to 302B illustrate examples of sensing regions of the radar 252 for short distance or medium distance. The sensing region 302F covers a position farther than the sensing region 301F in front of the vehicle 201. The sensing region 302B covers a position farther than the sensing region 301B behind the vehicle 201. The sensing region 302L covers the rear periphery of the left side surface of the vehicle 201. The sensing region 302R covers the rear periphery of the right side surface of the vehicle 201.

A sensing result in the sensing region 302F is used, for example, to detect a vehicle, a pedestrian, or the like existing in front of the vehicle 201. A sensing result in the sensing region 302B is used for, for example, a function of preventing a collision of the rear of the vehicle 201, and the like. Sensing results in the sensing region 302L and the sensing region 302R are used, for example, for detecting an object in a blind spot on the side of the vehicle 201.

Sensing regions 303F to 303B illustrate examples of sensing regions by the camera 251. The sensing region 303F covers a position farther than the sensing region 302F in front of the vehicle 201. The sensing region 303B covers a position farther than the sensing region 302B, on the rear side of the vehicle 201. The sensing region 303L covers the periphery of the left side surface of the vehicle 201. The sensing region 303R covers the periphery of the right side surface of the vehicle 201.

A sensing result in the sensing region 303F can be used for, for example, recognition of a traffic light or a traffic sign, a lane departure prevention assist system, and an automatic headlight control system. A sensing result in the sensing region 303B can be used for, for example, parking assistance, a surround view system, and the like. Sensing results in the sensing region 303L and the sensing region 303R can be used for a surround view system, for example.

A sensing region 304 illustrates an example of the sensing region of the LiDAR 253. The sensing region 304 covers a position farther than the sensing region 303F, on the front side of the vehicle 201. On the other hand, the sensing region 304 has a narrower range in the left-right direction than the sensing region 303F.

A sensing result in the sensing region 304 is used for, for example, detection of an object such as a neighboring vehicle.

A sensing region 305 illustrates an example of the sensing region of the long-distance radar 252. The sensing region 305 covers a position farther than the sensing region 304 in front of the vehicle 201. On the other hand, the sensing region 305 has a narrower range in the left-right direction than the sensing region 304.

The sensing result in the sensing region 305 is used for, for example, adaptive cruise control (ACC), emergency braking, collision avoidance, and the like.

Note that the sensing regions of the respective sensors of the camera 251, the radar 252, the LiDAR 253, and the ultrasonic sensor 254 included in the external recognition sensor 225 may have various configurations other than those in Fig. 7. Specifically, the ultrasonic sensor 254 may also sense the side of the vehicle 201, or the LiDAR 253 may sense the rear of the vehicle 201. Furthermore, an installation position of each sensor is not limited to each example described above.
Furthermore, the number of sensors may be one or plural.

### <Configuration example of sensor resource management table and substitutable map>

### (Sensor resource management table)

Next, a configuration example of the sensor resource management table 291 and the substitutable map 292 will be described with reference to Figs. 8 and 9.

Here, it is assumed that the LiDAR 253 of the external recognition sensor 225 and (for example, the IMU of) the vehicle sensor 227 correspond to the sensor 131-1 of Fig. 4, the travel assistance/automated driving control unit 229 corresponds to the processing unit 132-1 of Fig. 4, and a travel assistance/automated driving control subsystem 331 (Fig. 9) including them is a configuration corresponding to the subsystem 121-1 of Fig. 4.

That is, the travel assistance/automated driving control subsystem 331 (Fig. 9) corresponds to the subsystem 121-1, the LiDAR 253 of the external recognition sensor 225 and the vehicle sensor 227 are provided as a configuration corresponding to the sensor 131-1, and the travel assistance/automated driving control unit 229 is provided as a configuration corresponding to the processing unit 132-1.

Furthermore, it is assumed that the camera 251 of the external recognition sensor 225 corresponds to the sensor 131-2 of Fig. 4, the vehicle control unit 232 corresponds to the processing unit 132-2 of Fig. 4, and a vehicle control subsystem 332 (Fig. 9) including them is a configuration corresponding to the subsystem 121-2 of Fig. 4. Note that, here, it is assumed that the camera 251 of the external recognition sensor 225 corresponding to the sensor 131-2 is particularly a depth camera capable of measuring depth information.

That is, the vehicle control subsystem 332 (Fig. 9) corresponds to the subsystem 121-2, the camera 251 of the external recognition sensor 225 is provided as a configuration corresponding to the sensor 131-2, and the vehicle control unit 232 is provided as a configuration corresponding to the processing unit 132-2.

The sensor resource management unit 233 acquires the sensor resource information supplied from the respective management units 260 and 280 of the travel assistance/automated driving control subsystem 331 and the vehicle control subsystem 332 corresponding to the subsystems 121-1 and 121-2 in Fig. 4, and generates the sensor resource management table 291 as illustrated in Fig. 8.

The sensor resource information includes sensor types, data types, installation positions (sensing areas), measurement characteristics, substitutable conditions, and the like, and corresponding information is registered in the sensor resource management table 291.

The sensor types are information of specific types constituting the sensor 131 in Fig. 4, and in Fig. 8, the LiDAR 253 of the external recognition sensor 225 and the vehicle sensor 227 (IMU) are registered as types of sensors included in the travel assistance/automated driving control subsystem 331.

Furthermore, the camera 251 (Depth Camera) of the external recognition sensor 225 is registered as a type of sensor included in the vehicle control subsystem 332.

The data type is information indicating a format of data of a sensing result detected by a configuration corresponding to the sensor 133 in Fig. 4.

Fig. 8 illustrates that the data type of the LiDAR 253 of the external recognition sensor 225 is Point Cloud, the data type of the vehicle sensor 227 (IMU) is Analog, and the data type of the camera 251 (Depth Camera) of the external recognition sensor 225 is Point Cloud.

The installation position (sensing area) is information indicating the position where the configuration corresponding to the sensor 131 is installed and the sensing area.

In Fig. 8, the LiDAR 253 of the external recognition sensor 225 is described as Front Body (Front), and is described as being installed in a front part (Front Body) of the main body of the vehicle 201, and having a sensing area being the front of the vehicle 201.

Furthermore, the vehicle sensor 227 (IMU) is described as Front Body (Body Center), and is described as being installed in the front part (Front Body) of the main body of the vehicle 201, and having a sensing area being a main body center position (Body Center).

Moreover, the camera 251 (Depth Camera) of the external recognition sensor 225 is described as Front Body, Rear Body, LRside Body (Front, Rear, LRside), and is described as being installed in the front part (Front Body), a rear part (Rear Body), and left and right side parts (LRside Body) of the main body of the vehicle 201, and having sensing areas being a front side, a rear side, and left and right side parts (Front, Rear, LRside).

The measurement accuracy is information indicating a characteristic of a sensing result measured by a configuration corresponding to the sensor 131.

Fig. 8 illustrates that, for the LiDAR 253 of the external recognition sensor 225, the measurement period is period T1, the accuracy is accuracy A1, and the number of measurement points is the number of measurement points P1.

As for the vehicle sensor 227 (IMU), it is illustrated that the measurement period is period T2, and the accuracy is accuracy A2.

As for the camera 251 (Depth Camera) of the external recognition sensor 225, it is illustrated that the measurement period is period T3, the accuracy is accuracy A3, and the number of measurement points is the number of measurement points P3.

The substitutable condition indicates a condition for specifying a sensor whose sensing result is substitutable, and is expressed by, for example, a combination condition of sensor characteristics such as the sensor type, the data type, the installation position, and the measurement characteristic combined by and (logical product)/or (logical sum).

In Fig. 8, as for the LiDAR 253 of the external recognition sensor 225, "DataType: Point Cloud and Location: Front Body and period > α and accuracy > β and the number of measurement points > γ" is described, indicating that, as conditions, the data type is Point Cloud, the installation location is the front part of the main body of the vehicle 201, the period is larger than α, the accuracy is larger than β, and the number of measurement points is larger than γ.

Furthermore, as for the vehicle sensor 227 (IMU) "SensorType: IMU and DataType: Analog" is described, indicating that the sensor type is the IMU and the data type is analog as conditions.

Moreover, as for the camera 251 (Depth Camera) of the external recognition sensor 225, "DataType: Point Cloud and period > α'" is described, indicating that the data type is Point Cloud and the period is larger than α' as conditions.

### (Substitutable map)

Next, a configuration example of the substitutable map 292 will be described with reference to Fig. 9.

On the basis of the information of the sensor resource management table 291, the sensor resource management unit 233 searches for a sensor corresponding to the sensor 131 of Fig. 4 whose sensing result is substitutable for each of the configurations corresponding to the sensor 131 of Fig. 4 registered as the sensor type, regards the sensor that has been retrieved as a substitutable sensor pair, and expresses information of the sensor pair as the substitutable map 292. Here, the sensor pair means a pair of a sensor (malfunction sensor) in which malfunction such as failure has occurred and a normally operating sensor (normal sensor) that detects a sensing result that is substitutable with a sensing result of the sensor in which malfunction has occurred.

In the case of the sensor resource management table 291 of Fig. 8, one of the sensors registered in the sensor resource management table 291 is set as a sensor of interest, and a sensor other than the sensor of interest that can be a sensor pair, which is substitutable, is searched for by whether the sensors are the same as, similar to, or have an inclusion relationship, or the like on the basis of the information of the data types, the installation positions (sensing areas), and the measurement characteristics.

For example, in a case where the LiDAR 253 of the external recognition sensor 225 is the sensor of interest, a sensor that detects a substitutable sensing result is searched for by comparing the data type, the installation position (sensing area), and the measurement characteristic of another sensor with the data type, the installation position (sensing area), and the measurement characteristic described in the substitutable conditions of the sensor of interest as references.

The substitutable conditions of the LiDAR 253 of the external recognition sensor 225 are that the data type is Point Cloud, the sensing area is the front side (Front), and has a period, accuracy, and the number of measurement points equal to or more than a certain level, but for the camera 251 (Depth Camera) of the external recognition sensor 225, it is assumed that the data type is Point Cloud, the front side (Front) is included in the sensing area, and the measurement characteristics also satisfy the criteria.

Thus, the LiDAR 253 of the external recognition sensor 225 and the camera 251 (Depth Camera) can be considered as sensors that can be a sensor pair that detects substitutable sensing results.

Accordingly, the sensor resource management unit 233 regards the camera 251 (Depth Camera) of the external recognition sensor 225 that detects the substitutable sensing result in such a manner as a sensor that can be a sensor pair of the LiDAR 253 of the external recognition sensor 225, which is the sensor of interest.

In such a case, the sensor resource management unit 233 generates the substitutable map 292 as illustrated in Fig. 9, for example, as information indicating that a substitutable sensor pair in a case where the LiDAR 253 of the external recognition sensor 225 has failed is the camera 251 (Depth Camera) of the external recognition sensor 225.

The substitutable map 292 is graph-type data that describes information of the subsystems 121 with the respective sensors 131 along with the sensors 131 in Fig. 4 as sensor pairs.

That is, in a case where the camera 251 (Depth Camera) of the external recognition sensor 225 is a sensor pair of the LiDAR 253 of the external recognition sensor 225, the configurations of the travel assistance/automated driving control subsystem 331 and the vehicle control subsystem 332 corresponding to the subsystem 121 of Fig. 4 including them are described in the substitutable map 292 of Fig. 9.

That is, in the substitutable map 292 of Fig. 9, the configurations of the travel assistance/automated driving control subsystem 331 including the LiDAR 253 of the external recognition sensor 225, which is the sensor of interest, and the vehicle control subsystem 332 including the camera 251 (depth camera) of the external recognition sensor 225, which is the sensor pair of the sensor of interest, are illustrated.

In the substitutable map 292 of Fig. 9, for the travel assistance/automated driving control subsystem 331, two arrows starting from the travel assistance/automated driving control unit 229 corresponding to the processing unit 132 of Fig. 4 are connected with the LiDAR 253 of the external recognition sensor 225 and the vehicle sensor 227 (IMU) as respective endpoints.

That is, this expresses that the travel assistance/automated driving control unit 229 corresponding to the processing unit 132 in Fig. 4 in the travel assistance/automated driving control subsystem 331 acquires a sensing result necessary for executing processing from the LiDAR 253 of the external recognition sensor 225 and the vehicle sensor 227 (IMU).

Similarly, for the vehicle control subsystem 332, one arrow starting from the vehicle control unit 232 corresponding to the processing unit 132 in Fig. 4 is connected with the camera 251 (Depth Camera) of the external recognition sensor 225 as an end point.

That is, this expresses that the vehicle control unit 232 corresponding to the processing unit 132 in Fig. 4 in the vehicle control subsystem 332 acquires the sensing result necessary for executing the processing from the camera 251 (Depth Camera) of the external recognition sensor 225.

Moreover, a dotted arrow starting from the camera 251 (Depth Camera) of the external recognition sensor 225 and ending at the LiDAR 253 of the external recognition sensor 225 is written, and it is expressed that a sensor pair that is substitutable in a case where the LiDAR 253 of the external recognition sensor 225 fails is the camera 251 (Depth Camera) of the external recognition sensor 225.

In the substitutable map 292, a dotted arrow specifies that, in a case where the LiDAR 253 of the external recognition sensor 225 has failed, the transmission source of the substitutable sensing result with respect to the sensing result of the LiDAR 253 of the external recognition sensor 225 is the camera 251 (Depth Camera) of the external recognition sensor 225, and the transmission destination is the travel assistance/automated driving control unit 229 that uses the sensing result of the LiDAR 253 of the external recognition sensor 225 when it is not in a failed state.

In a case where a failure of the LiDAR 253 of the external recognition sensor 225 has occurred, the sensor resource management unit 233 searches for the substitutable map 292 as illustrated in Fig. 9 in which the information of the sensor pair of the LiDAR 253 of the external recognition sensor 225 is recorded.

Then, on the basis of the information of the substitutable map 292 in Fig. 9, the sensor resource management unit 233 supplies a transfer instruction to the management unit 280 of the vehicle control unit 232 to transfer the sensing result of the camera 251 (Depth Camera) of the external recognition sensor 225 to the management unit 260 of the travel assistance/automated driving control unit 229 as a substitutable sensing result for the LiDAR 253 of the failed external recognition sensor 225.

On the basis of this transfer instruction, the management unit 280 of the vehicle control unit 232 transfers the sensing result of the camera 251 (Depth Camera) of the external recognition sensor 225 to the management unit 260 of the travel assistance/automated driving control unit 229.

The management unit 260 of the travel assistance/automated driving control unit 229 executes its own processing by substituting the sensing result of the camera 251 (depth camera) of the external recognition sensor 225 transferred from the management unit 280 of the vehicle control unit 232 for the sensing result of the LiDAR 253 of the failed external recognition sensor 225.

By such processing, even if a failure occurs in the LiDAR 253 of the external recognition sensor 225, the travel assistance/automated driving control unit 229 constituting the travel assistance/automated driving control subsystem 331 can continue the processing.

Note that the above-described substitutable condition is an example, other substitutable conditions may be set, and various variations are conceivable for the substitutable condition. For example, although the example of the substitutable map 292 configured when the LiDAR 253 of the external recognition sensor 225 is the sensor of interest has been described above, for example, in a case where the sensor of interest is the camera 251 (Depth Camera) of the external recognition sensor 225, it is also conceivable that the substitutable map 292 in which the direction of the dotted arrow in Fig. 9 is reversed cannot be formed.

That is, in the sensor resource management table 291 of Fig. 8, assuming that the sensor of interest is the camera 251 (Depth Camera) of the external recognition sensor 225, the sensing area of the camera 251 (Depth Camera) is the front side, the rear side, and the left and right side surfaces (Front, Rear, LRside), but regarding the sensing area of the LiDAR 253 of the external recognition sensor 225, the sensing area is only the front side (Front) of the vehicle 201.

In a case where the camera 251 (Depth Camera) of the external recognition sensor 225 fails, it is not possible to cover all the sensing areas only with the sensing result of the LiDAR 253 of the external recognition sensor 225.

That is, the sensing area in the sensing result of the LiDAR 253 of the external recognition sensor 225 is a part of the sensing result of the camera 251 (Depth Camera) of the external recognition sensor 225, and does not cover the entire range.

Conversely, the sensing result of the camera 251 (Depth Camera) of the external recognition sensor 225 covers the entire sensing area of the sensing result of the LiDAR 253 of the external recognition sensor 225 in the sensing area.

Therefore, even if the sensor resource management unit 233 compares the camera 251 (Depth Camera) of the external recognition sensor 225 as the sensor of interest with the LiDAR 253 of the external recognition sensor 225 with respect to each of the data type, the installation position (sensing area), and the measurement characteristic, it is conceivable that the sensor cannot be recognized as a substitutable sensor, that is, a sensor pair.

As described above, whether or not the sensing result between the sensors is substitutable may be set so that whether or not the sensing result is substitutable varies depending on the inclusion relationship of the sensing area even if the data type, the installation position, the measurement characteristic, and the like are the same or similar.

However, there may be a case where it is better to execute the processing by the vehicle control unit 232 using only the sensing result of only the front side (Front) of the vehicle 201 obtained from the LiDAR 253 of the external recognition sensor 225.

In such a case, the LiDAR 253 of the external recognition sensor 225 may be regarded as a sensor pair of the camera 251 (Depth Camera) of the external recognition sensor 225, and the substitutable map 292 in which the start point and the end point of the arrow indicated by the dotted line in Fig. 9 are interchanged may be generated, for example.

Furthermore, in the above-described example, when the LiDAR 253 of the external recognition sensor 225 is set as the sensor of interest, it is assumed that measurement characteristics of the camera 251 (Depth Camera) of the external recognition sensor 225 are the same or similar within a predetermined range.

However, in the comparison of the measurement characteristics between the LiDAR 253 of the external recognition sensor 225 and the camera 251 (Depth Camera), when the camera 251 (Depth Camera) has higher accuracy in all of the period, accuracy, and the number of measurement points, the camera 251 (Depth Camera) can be regarded as a sensor pair, but when any of them has lower accuracy, it can be considered that the camera 251 (Depth Camera) cannot be regarded as a sensor pair.

Specifically, the reason why is that when the external recognition sensor 225 LiDAR 253 fails, even if a sensing result of the camera 251 (Depth Camera) of the external recognition sensor 225 that can obtain only a low-accuracy sensing result is used as a substitute, the processing accuracy in the travel assistance/automated driving control subsystem 331 may decrease.

However, there may be a case where it is better to perform processing even with low accuracy by using the sensing result of the camera 251 (Depth Camera) of the external recognition sensor 225 as a substitute rather than stopping the processing of the travel assistance/automated driving control subsystem 331 due to the failure of the LiDAR 253 of the external recognition sensor 225.

In such a case, the camera 251 (Depth Camera) of the external recognition sensor 225 may be regarded as a sensor pair of the LiDAR 253 of the external recognition sensor 225, and for example, the substitutable map 292 in which the start point and the end point of the arrow indicated by the dotted line in Fig. 9 are interchanged may be generated. As described above, various variations are conceivable as the substitutable condition.

Note that the configuration example of the substitutable map 292 in Fig. 9 is a configuration example of graph type data, but may be expressed by data other than graph type data as long as it is a configuration capable of indicating a subsystem or a sensor to be a transfer source and a subsystem or a sensor to be a transfer destination of substitutable sensing results.

### <Activation Processing>

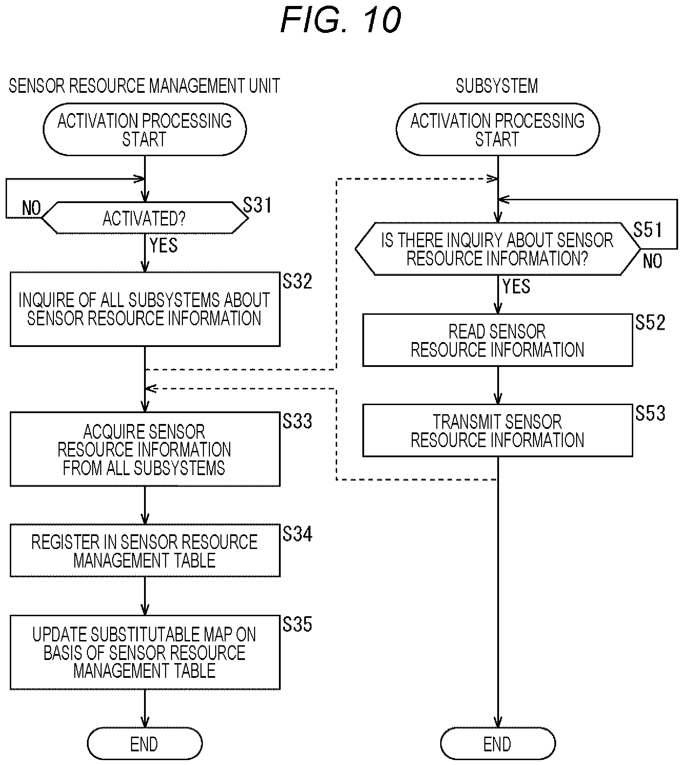

Next, with reference to a flowchart of Fig. 10, activation processing that is processing at the time of activation when the sensor resource management table 291 and the substitutable map 292 are generated will be described. Note that, in this example, an example in which the sensor resource management table 291 and the substitutable map 292 are generated at the time of activation will be described, but they may be performed at other timings. For example, in a case where the sensors are configured to be hot-swappable and are configured to be detachable at any timing, the processing of generating the sensor resource management table 291 and the substitutable map 292 may be repeated at predetermined time intervals.

In step S31, the sensor resource management unit 233 determines whether or not the vehicle 201 has been activated, and repeats similar processing until it is determined that the vehicle has been activated. Then, in a case where it is determined in step S31 that the vehicle has been activated, the processing proceeds to step S32.

In step S32, the sensor resource management unit 233 inquires of the management units of all the subsystems about the sensor resource information. In the vehicle 201 of Fig. 6, the sensor resource management unit 233 inquires of the management unit 260 of the travel assistance/automated driving control subsystem 331 and the management unit 280 of the vehicle control subsystem 332, which constitute each of the travel assistance/automated driving control subsystem 331 and the vehicle control subsystem 332, respectively, about the sensor resource information.

In step S51, the management units 260 and 280 of the travel assistance/automated driving control subsystem 331 and the vehicle control subsystem 332 determine whether or not there is an inquiry about the sensor resource information from the sensor resource management unit 233, and repeat similar processing until there is the inquiry.

In step S51, for example, in a case where there is the inquiry about the sensor resource information by the processing in step S32, the processing proceeds to step S52.

In step S52, the management units 260 and 280 read resource information of sensors included in the travel assistance/automated driving control subsystem 331 and the vehicle control subsystem 332 stored in advance.

That is, in the example of Fig. 6, the management unit 260 reads the LiDAR 253 of the external recognition sensor 225 constituting the travel assistance/automated driving control subsystem 331 and the data type, the installation position (sensing area), and the measurement characteristic which are sensor resource information of the vehicle sensor 227 (IMU) stored in advance.

Furthermore, in the example of Fig. 6, the management unit 280 reads a data type, an installation position (sensing area), and a measurement characteristic which are sensor resource information of the camera 251 (depth camera) of the external recognition sensor 225 constituting the vehicle control subsystem 332 stored in advance.

In step S53, the management units 260 and 280 transmit respective pieces of read sensor resource information to the sensor resource management unit 233.

In step S33, the sensor resource management unit 233 acquires sensor resource information from all the subsystems. That is, in Fig. 6, the sensor resource management unit 233 acquires the sensor resource information supplied from the management unit 260 of the travel assistance/automated driving control unit 229 and the management unit 280 of the vehicle control unit 232 that constitute the travel assistance/automated driving control subsystem 331 and the vehicle control subsystem 332, respectively.

In step S34, the sensor resource management unit 233 generates the sensor resource management table 291 described with reference to Fig. 8 on the basis of the acquired sensor resource information and registers the sensor resource management table 291 in the storage unit 228.

In step S35, the sensor resource management unit 233 reads the registered sensor resource management table 291 from the storage unit 228, generates the substitutable map 292 as illustrated in Fig. 9, for example, for each sensor pair capable of acquiring the substitutable sensing result as described above, and registers the substitutable map in the storage unit 228.

By the series of processing described above, every time the vehicle 201 is activated, the sensor resource information of the sensors constituting all the subsystems is acquired, and the sensor resource management table 291 is generated. Moreover, on the basis of the information of the sensor resource management table 291, the substitutable map 292 is generated for each sensor pair having the substitutable sensor as a pair.

### <Sensor Resource Management Processing>

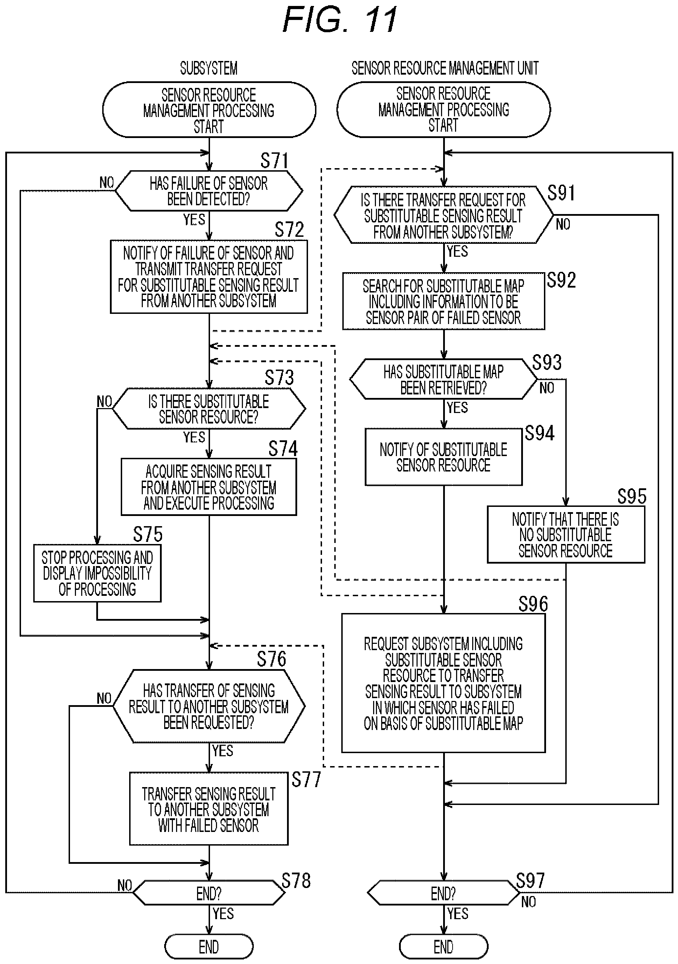

Next, with reference to the flowchart of Fig. 11, sensor resource management processing will be described that implements processing of transferring a sensing result of another sensor to be a sensor pair when a sensor failure occurs, using the sensor resource management table 291 and the substitutable map 292 registered in the storage unit 228.

Here, in describing the processing of the subsystem, as a specific example, processing in a case where a failure occurs in the LiDAR 253 of the external recognition sensor 225 in the travel assistance/automated driving control subsystem 331, and the sensing result of the camera 251 (depth camera) of the external recognition sensor 225 of the vehicle control unit 232 is transferred on the basis of the above-described substitutable map 292 of Fig. 9 will be described.

However, this describes representative sensor resource management processing, and basically similar processing is performed even in a case where another sensor in another subsystem fails.

In step S71, the management unit 260 of the travel assistance/automated driving control unit 229 in the travel assistance/automated driving control subsystem 331 determines whether or not it has been detected that a failure (malfunction) has occurred in the LiDAR 253 of the external recognition sensor 225 and the vehicle sensor 227 (IMU), which detect sensing results used for processing by the management unit 260 itself.

For example, in a case where there is no sensing result output from either of the LiDAR 253 of the external recognition sensor 225 and the vehicle sensor 227 (IMU), it is detected that a failure has occurred.

At this time, similar processing is also performed in other subsystems, and in the vehicle control subsystem 332, for example, the management unit 280 of the vehicle control unit 232 determines whether or not a failure has been detected in the camera 251 (Depth Camera) of the external recognition sensor 225 that detects the sensing result used for processing by the management unit 280 itself.

In step S71, for example, in a case where it is detected that a failure has occurred in the LiDAR 253 of the external recognition sensor 225, the processing proceeds to step S72.

In step S72, the management unit 260 notifies the sensor resource management unit 233 that a failure has occurred in the LiDAR 253 of the external recognition sensor 225, and transmits a transfer request for a substitutable sensing result from another subsystem.

In step S91, the sensor resource management unit 233 determines whether or not there has been a transfer request for a substitutable sensing result from another subsystem from any of the subsystems.

In step S91, for example, in a case where a failure of the LiDAR 253 of the external recognition sensor 225 is detected from the travel assistance/automated driving control subsystem 331 by the processing in step S72, and it is determined that there is a transfer request for a substitutable sensing result from another subsystem, the processing proceeds to step S92.

In step S92, the sensor resource management unit 233 accesses the storage unit 228, and searches for the substitutable map 292 including information of a sensor pair of the failed sensor (information of a sensor detecting a sensing result that is substitutable for a sensing result of the failed sensor) from the substitutable maps 292-1 to 292-x.

In step S93, the sensor resource management unit 233 determines whether or not the substitutable map 292 including the sensor pair of the failed sensor has been retrieved.

In step S93, for example, when the substitutable map 292 of Fig. 9 including information of the camera 251 (depth camera) of the external recognition sensor 225 that is a sensor pair with the LiDAR 253 of the external recognition sensor 225 is retrieved, it is considered that the substitutable map 292 including the sensor pair of the failed sensor is retrieved, and the processing proceeds to step S94.

In step S94, the sensor resource management unit 233 notifies the subsystem in which the sensor has failed and that has transmitted the transfer request of information indicating that there is a substitutable sensor resource and from which subsystem the substitutable sensing result is to be transferred, and the processing proceeds to step S96.

In this case, since the travel assistance/automated driving control subsystem 331 has requested transfer of a sensing result substitutable for the sensing result of the LiDAR 253 of the external recognition sensor 225, the sensor resource management unit 233 notifies the management unit 260 of the travel assistance/automated driving control subsystem 331 that the sensing result of the camera 251 (Depth Camera) of the external recognition sensor 225 is transferred from the vehicle control subsystem 322 as a substitutable sensing result on the basis of the substitutable map 292 in Fig. 9.

Moreover, in step S96, the sensor resource management unit 233 requests transfer by assigning another subsystem including a substitutable sensor resource to transfer a corresponding sensing result to the subsystem in which the sensor has failed on the basis of the information of the searched substitutable map 292.

In this example, since it is determined that the substitutable sensor resource is the camera 251 (Depth Camera) of the external recognition sensor 225 of the vehicle control subsystem 332 on the basis of the information of the substitutable map 292 in Fig. 9, the sensor resource management unit 233 requests the management unit 280 of the vehicle control unit 232 in the vehicle control subsystem 332 to transfer the sensing result of the camera 251 (Depth Camera) of the external recognition sensor 225 to the management unit 260 of the travel assistance/automated driving control unit 229 in the travel assistance/automated driving control subsystem 331 in which the LiDAR 253 of the external recognition sensor 225 has failed.

Furthermore, in a case where the substitutable map 292 including the sensor pair of the failed sensor cannot be retrieved in step S93, the processing proceeds to step S95.

In step S95, the sensor resource management unit 233 notifies the management unit 260 of the travel assistance/automated driving control subsystem 331, which is the subsystem that has transmitted the transfer request for the substitutable sensing result, of information indicating that there is no substitutable sensor resource, and the processing proceeds to step S97.

In step S73, the management unit 260 of the travel assistance/automated driving control subsystem 331 acquires a notification from the sensor resource management unit 233, and determines whether or not the notification is a notification indicating that there is a substitutable sensor resource.

In step S73, for example, by the processing in step S94, information indicating that there is a substitutable sensor resource and from which subsystem the sensing result is to be transferred is acquired, the sensing result transferred from another subsystem is acquired, and the processing is executed.

Furthermore, in step S73, for example, in a case where it is determined by the processing of step S95 that a notification indicating that there is no substitutable sensor resource has been transmitted, the processing proceeds to step S75.

In step S75, the management unit 260 stops the processing of the travel assistance/automated driving control unit 229, and displays that abnormality has occurred in the sensor and the processing is not possible on the HMI 230 or the like as necessary.

Furthermore, in a case where it is determined in step S71 that no sensor failure is detected, the processing in steps S72 to S75 is skipped, and the processing proceeds to step S76.

In step S76, it is determined whether or not a transfer request has been transmitted to transfer the sensing result to another subsystem. In this example, the management unit 280 of the vehicle control unit 232 in the vehicle control subsystem 332, which is another subsystem, determines whether or not it has been requested by the sensor resource management unit 233 to transfer the sensing result of the sensor included therein.

In step S76, for example, in a case where there is a request to transfer the sensing result of the camera 251 (Depth Camera) of the external recognition sensor 225 to the management unit 260 of the travel assistance/automated driving control unit 229 in the travel assistance/automated driving control subsystem 331 in which the LiDAR 253 of the external recognition sensor 225 has failed by the processing in step S96, the processing proceeds to step S77.

In step S77, the management unit 280 transfers the sensing result of the camera 251 (Depth Camera) of the external recognition sensor 225 to the management unit 260 of the travel assistance/automated driving control unit 229 in the travel assistance/automated driving control subsystem 331 in which the LiDAR 253 of the external recognition sensor 225 has failed.

Note that, in a case where it is determined in step S76 that it is not requested to transfer the sensing result of the sensor included in the own subsystem, the processing of step S77 is skipped.

Then, in steps S78 and S97, it is determined whether or not end has been instructed, and in a case where it is determined that the end has not been instructed, the processing return to steps S71 and S91. That is, in a case where the end is not instructed, the processing of steps S71 to S78 and steps S91 to S97 is repeated.

Then, in a case where it is determined in steps S78 and S97 that an instruction to end the processing has been given, the processing ends.

By the above processing, in a case where a failure occurs in a sensor included in each of the subsystems as a unit, the substitutable map 292 including information of a sensor of another subsystem that is substitutable and forms a sensor pair with the failed sensor is retrieved on the basis of the substitutable map 292 generated by the above-described processing, and a sensing result of a sensor of another subsystem is transferred on the basis of the retrieved substitutable map 292.

As a result, in the vehicle control system 211 constructed with a plurality of subsystems such as the travel assistance/automated driving control subsystem 331 and the vehicle control subsystem 332, even if a sensor of one of the subsystems fails, a sensing result of a sensor of another subsystem that can be substituted is transferred, so that the stability of the entire operation of the vehicle control system 211 can be improved, and automated driving with high safety and stability can be implemented.

At this time, as long as the sensor does not fail in any of the subsystems, the substitutable sensing result is not transferred to the other subsystems, so that an increase in communication load associated with distribution of unnecessary substitutable sensing results is suppressed.

Furthermore, since the vehicle control system 211 as a whole includes a plurality of subsystems, the operation test and the like can be performed in units of subsystems, so that the operation test can be simplified.

Moreover, since the vehicle control system 211 can be developed in units of subsystems in developing the vehicle control system, it is possible to set the development system in units of subsystems, reduce the cost related to development, and improve the development speed.

### <<2. First Application Example>>

In the above, in creating the substitutable map 292, an example has been described in which the sensor resource management table 291 is generated on the basis of the sensor resource information for each sensor, and the substitutable map 292 is generated on the basis of the information registered in the sensor resource management table 291.

However, it can be considered that a sensor pair, which is a combination of sensors included in the substitutable map 292, is established if there is a correlation between mutual sensing results.

Accordingly, sensing results for each sensor during traveling may be recorded, and a correlation of the sensing results between the sensors may be obtained while the traveling ends and the vehicle is stopped, and the substitutable map 292 may be generated by regarding sensors having a high correlation as a sensor pair.

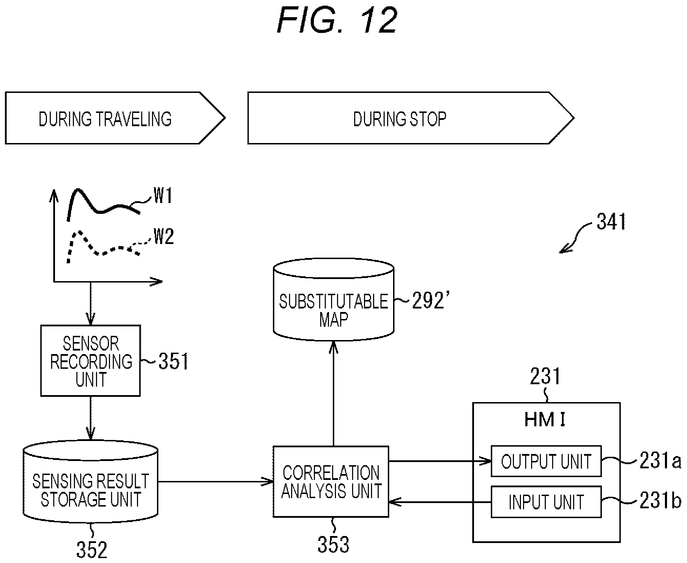

More specifically, a substitutable map generation block 341 as illustrated in Fig. 12 is contemplated.

The substitutable map generation block 341 in Fig. 12 includes a sensor recording unit 351, a sensing result storage unit 352, and a correlation analysis unit 353, and is incorporated in the vehicle control system 211.

The sensor recording unit 351 reads sensing results of various sensors provided in the vehicle control system 211 while the vehicle 201 is traveling, such as the external recognition sensor 225, the in-vehicle sensor 226, and the vehicle sensor 227, and stores the sensing results in the sensing result storage unit 352.

After the vehicle 201 finishes traveling, the correlation analysis unit 353 calculates, for example, similarity as an index indicating the correlation between the sensors of the sensing results of the various sensors stored in the sensing result storage unit 352 while the vehicle is stopped. Note that, as the index indicating the correlation, an index other than the similarity may be obtained as long as the index can indicate a mutual correlation, and for example, a correlation coefficient or the like may be used.

For example, when a combination of sensors considered to have similarity and a high correlation is detected, such as waveforms of sensing results of two sensors indicated by waveforms W1 and W2 illustrated in an upper part of the sensor recording unit 351 in Fig. 12, the correlation analysis unit 353 sets sensors considered to have a high correlation in sensing results as sensor pair candidates.

Then, the correlation analysis unit 353 outputs information of sensor pair candidates having a high correlation to an output unit 231a of the HMI 231 including, for example, a display unit or the like, and presents the information to an occupant, a driver, or an automobile system administrator, thereby urging determination as to whether or not the sensors to be the sensor pair candidates are regarded as a sensor pair.

In response to this, when an input unit 231b including an operation button, a touch panel, or the like of the HMI 231 is operated and information that allows the two sensors that are the presented sensor pair candidates to be regarded as a sensor pair is input, the correlation analysis unit 353 notifies the sensor resource management unit 233 that the sensors are regarded as a sensor pair, for example.

In response to this notification, the sensor resource management unit 233 regards the sensors set as the sensor pair candidates as a sensor pair, reads the sensor resource information from the sensor resource management table 291 for the corresponding sensor, generates a substitutable map 292', and stores the substitutable map in the storage unit 228.

Note that the substitutable map based on the sensor pair set on the basis of the correlation of the sensing results is referred to as a "substitutable map 292'" with "'" attached to the reference numeral. The substitutable map 292' is generated separately from the substitutable map 292, but a method of use when a failure (malfunction) occurs in the sensor is similar to the substitutable map 292. Furthermore, the substitutable maps 292 and 292' may coexist, or only one of them may be used.

With such a configuration, even among sensors that cannot be regarded as a sensor pair from which a substitutable sensing result can be obtained when a failure occurs in any of the sensors from the sensor resource information, sensors having a high correlation with respect to the sensing result are regarded as a sensor pair, so that it is possible to form more substitutable maps 292'.

As a result, even after a sensor fault occurs, substitutable sensor resources can be increased, a sensor fault can be appropriately handled, and automated driving with improved safety and stability can be implemented.

### <Configuration example of vehicle control system incorporating substitutable map generation block>

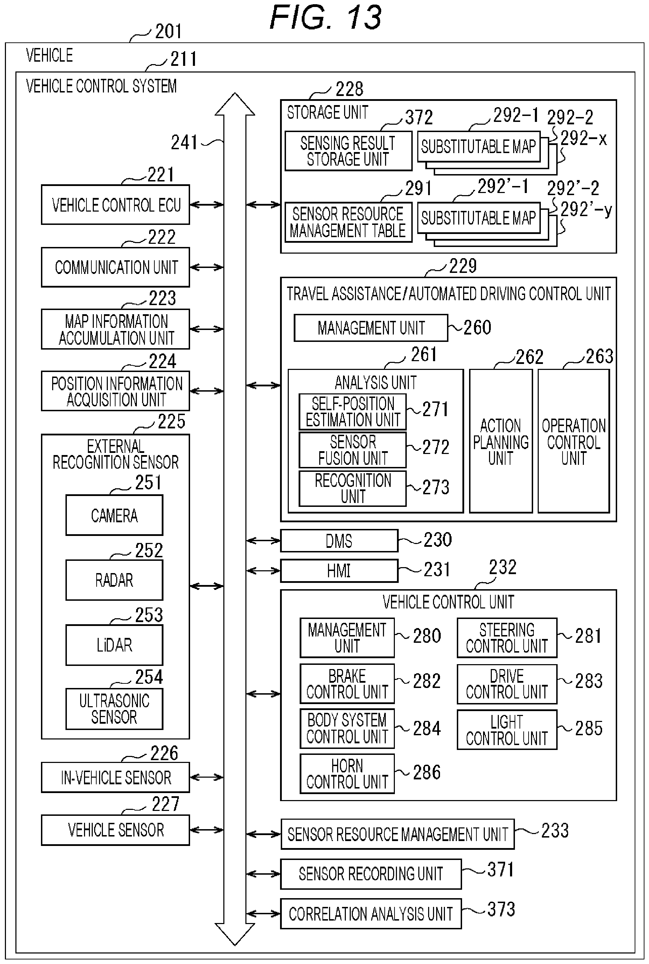

Next, with reference to Fig. 13, a configuration example of the vehicle control system 211 in a case where the substitutable map generation block 341 of Fig. 12 is incorporated into the vehicle control system 211 of Fig. 6 will be described.

Note that, in the vehicle control system 211 of Fig. 13, components having the same functions as those of the vehicle control system 211 of Fig. 6 are denoted by the same reference numerals, and the description thereof will be appropriately omitted.

The vehicle control system 211 of Fig. 13 is different from the vehicle control system 211 of Fig. 6 in that a sensor recording unit 371, a sensing result storage unit 372, and a correlation analysis unit 373 are newly provided, and the above-described substitutable maps 292'-1 to 292'-y are stored in the storage unit 228.

The sensor recording unit 371 is a configuration corresponding to the sensor recording unit 351 in Fig. 12, and acquires various sensing results from the external recognition sensor 225, the in-vehicle sensor 226, and the vehicle sensor 227 during traveling, and stores the sensing results in the sensing result storage unit 372 of the storage unit 228.

The sensing result storage unit 372 is a configuration corresponding to the sensing result storage unit 352 in Fig. 12, and stores various sensing results supplied from the sensor recording unit 371.

The correlation analysis unit 373 is a configuration corresponding to the correlation analysis unit 353 in Fig. 12, accesses the sensing result storage unit 372 stored in the storage unit 228, obtains the correlation between the sensors for sensing results of various sensors, and sets the sensors having the sensing results with the correlation higher than a predetermined threshold as sensor pair candidates.

The correlation analysis unit 373 presents information indicating the sensors as sensor pair candidates and the correlation based on sensing results to the output unit 231a including a display unit or the like of the HMI 231, and presents information for inquiring the occupant or the driver whether or not to assume them as a sensor pair.

In response to this, when the input unit 231b including an operating unit or the like of the HMI 231 is operated and information indicating that the sensor pair is accepted is input, the correlation analysis unit 373 supplies the sensor resource management unit 233 with information of the sensors that have been set as the sensor pair candidates as information of the sensor pair.

Upon acquiring the information of the sensors to be the sensor pair supplied from the correlation analysis unit 373, the sensor resource management unit 233 accesses the sensor resource management table 291, generates the substitutable map 292' by the above-described method, and stores the map as the substitutable maps 292'-1 to 292'-y in the storage unit 228.

Note that the substitutable maps 292'-1 to 292'-y illustrated in Fig. 13 express that y substitutable maps 292' generated by the configuration corresponding to the substitutable map generation block 341 described with reference to Fig. 12 are stored.

In this case, when a failure (malfunction) occurs in any one of the sensors, the sensor resource management unit 233 searches for at least one of the substitutable maps 292 and 292' generated on the basis of information to be a sensor pair with the failed sensor, and instructs to transfer the substitutable sensing result to the failed sensor.

### <Sensing Result Storage Processing>

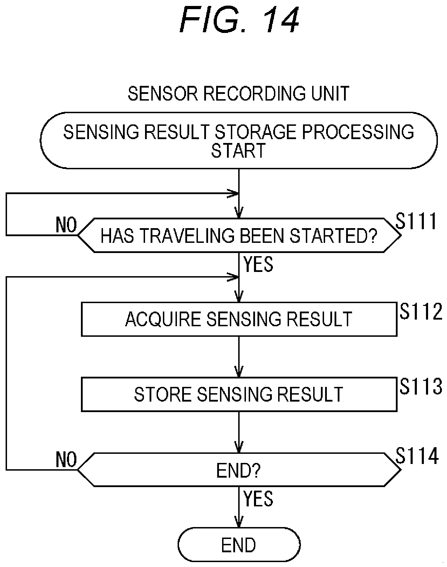

Next, sensing result storage processing by the vehicle control system 211 in Fig. 13 will be described with reference to a flowchart in Fig. 14.

In step S111, the sensor recording unit 371 determines whether or not traveling has been started, and repeats similar processing until traveling is started. Then, in a case where it is determined in step 5111 that traveling has been started, the processing proceeds to step S112.

In step S112, the sensor recording unit 371 acquires sensing results of various sensors such as the external recognition sensor 225, the in-vehicle sensor 226, and the vehicle sensor 227.

In step S113, the sensor recording unit 371 stores the acquired sensing results of the various sensors in the sensing result storage unit 372.

In step S114, the sensor recording unit 371 determines whether or not the traveling has ended, and in a case where the traveling has not ended, the processing returns to step S112.

That is, the processes of steps S112 to S114 are repeated from the start to the end of traveling, and the sensor recording unit 371 continues to store the sensing results of the various sensors such as the external recognition sensor 225, the in-vehicle sensor 226, and the vehicle sensor 227 in the sensing result storage unit 372.

Then, in a case where it is determined in step S114 that the traveling has ended, the processing ends.

By the above processing, during traveling, sensing results of various sensors such as the external recognition sensor 225, the in-vehicle sensor 226, and the vehicle sensor 227 are continuously stored in the sensing result storage unit 372.

### <Correlation Analysis Processing>

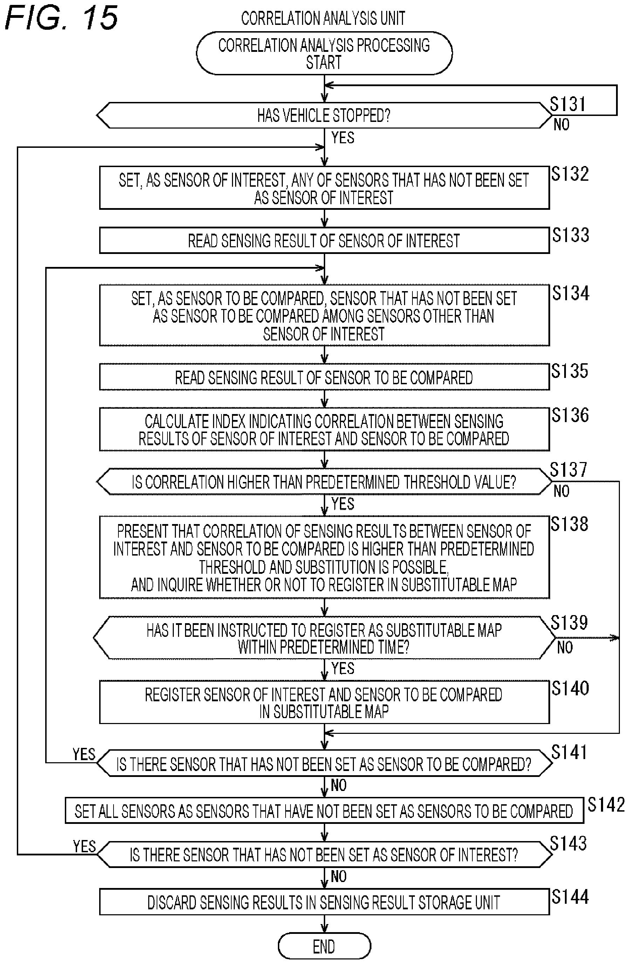

Next, correlation analysis processing by the vehicle control system 211 in Fig. 13, in which the correlation of sensing results of various sensors stored in the sensing result storage unit 372 is obtained, and the substitutable map is registered according to the correlation, will be described with reference to the flowchart in Fig. 15.

In step S131, the correlation analysis unit 373 determines whether or not the traveling of the vehicle 201 has stopped, and repeats similar processing until it is determined that the traveling has stopped.

Then, in a case where it is determined in step S131 that the traveling of the vehicle 201 has stopped, the processing proceeds to step S132.

In step S132, the correlation analysis unit 373 sets, as a sensor of interest, any of the sensors that has not been set as the sensor of interest among various sensors such as the external recognition sensor 225, the in-vehicle sensor 226, and the vehicle sensor 227 provided in the vehicle control system 211.

In step S133, the correlation analysis unit 373 accesses the sensing result storage unit 372 stored in the storage unit 228 and reads the sensing result of the sensor of interest.

In step S134, the correlation analysis unit 373 sets, as a sensor to be compared, any of the sensors that has not been set as the sensor to be compared among various sensors such as the external recognition sensor 225, the in-vehicle sensor 226, and the vehicle sensor 227 excluding the sensor of interest provided in the vehicle control system 211.

In step S135, the correlation analysis unit 373 accesses the sensing result storage unit 372 stored in the storage unit 228 and reads the sensing result of the sensor to be compared.

In step S136, the correlation analysis unit 373 calculates an index indicating the correlation between the sensing results of the sensor of interest and the sensor to be compared. The correlation analysis unit 373 calculates, for example, similarity between sensing results of the sensor of interest and the sensor to be compared as the index of correlation.

In step S137, the correlation analysis unit 373 determines whether or not the correlation (here, the similarity) between the sensor of interest and the sensor to be compared is higher than the predetermined threshold on the basis of the index of correlation.

In a case where it is determined in step S137 that the correlation between the sensor of interest and the sensor to be compared is higher than the predetermined threshold, the processing proceeds to step S138.

In step S138, the correlation analysis unit 373 presents, to the HMI 231, information indicating that the correlation between the sensor of interest and the sensor to be compared is higher than the predetermined threshold, the sensing result of the sensor of interest can be substituted by the sensing result of the sensor to be compared, and the sensors are sensor pair candidates with each other, and information inquiring whether or not to generate and register the substitutable map 292' by regarding the sensors as the sensor pair.

In step S139, the correlation analysis unit 373 determines whether or not the HMI 231 is operated and it is instructed to generate and register the substitutable map 292' within a predetermined time after inquiring whether or not to generate and register the substitutable map 292'.

In a case where it is determined in step S139 that the HMI 231 is operated and it is instructed to generate and register the substitutable map 292', the processing proceeds to step S140.

In step S140, the correlation analysis unit 373 supplies information of the sensor of interest and the sensor to be compared to the sensor resource management unit 233, and requests for generation and registration of the substitutable map 292'. In response to this request, the sensor resource management unit 233 accesses the sensor resource management table 291 of the storage unit 228, reads the sensor resource information of the sensor of interest and the sensor to be compared, generates the substitutable map 292' of the sensor of interest and the sensor to be compared, and registers the substitutable map 292' in the storage unit 228.

Note that, in a case where the correlation is lower than the predetermined threshold in step S137, or in a case where it is determined in step S139 that it is not instructed to generate and register the substitutable map 292' within the predetermined time, the processing proceeds to step S141.

In step S141, the correlation analysis unit 373 determines whether or not there is any of the sensors that has not been set as the sensor to be compared among the sensors excluding the sensor of interest, and in a case where it is determined that there is any sensor that has not been set as the sensor to be compared, the processing returns to step S134.

That is, the processing of steps S134 to S141 is repeated until all the sensors excluding the sensor of interest are set as the sensor to be compared.

Then, in step S141, in a case where it is determined that there is no sensor that has not been set as the sensor to be compared among the sensors excluding the sensor of interest, that is, in a case where it is determined that all the sensors other than the sensor of interest have been set as the sensor to be compared, the processing proceeds to step S142.

In step S142, the correlation analysis unit 373 sets all the sensors as sensors that have not been set as the sensor to be compared.

In step S143, the correlation analysis unit 373 determines whether or not there is a sensor that has not been set as the sensor of interest among all the sensors, and in a case where it is determined that there is a sensor that has not been set as the sensor of interest, the processing returns to step S132.

That is, the processing of steps S132 to S143 is repeated until all the sensors are set as the sensors of interest and the correlation is checked among all the sensors.

Then, in step S143, in a case where all the sensors are set as the sensors of interest, and it is determined that the correlation is checked among all the sensors, the processing proceeds to step S144.

In step S144, the correlation analysis unit 373 discards all the sensing results stored in the sensing result storage unit 372, and the processing ends.

By the above processing, the correlation is checked among all the sensors stored in the sensing result storage unit 372, and when the correlation is higher than the predetermined threshold, the sensor of interest and the sensor to be compared are set as sensor pair candidates, and information inquiring whether or not to generate and register the substitutable map 292' as a sensor pair is presented to the occupant and the driver.

Then, when the registration of the substitutable map 292' is instructed in response to the inquiry, the sensor of interest and the sensor to be compared having a high correlation are regarded as a sensor pair, and the substitutable map 292' is generated and registered.

Thus, even between sensors that are not recognized as sensor pairs from the sensor resource information registered in the sensor resource management table 291, it is possible to register the substitutable map 292' by regarding sensors having a correlation with sensing results as sensor pairs.

As a result, even when a sensor fault occurs, substitutable sensor resources can be increased, it is possible to appropriately respond to the sensor fault, and it is possible to implement safer and more stable automated driving.

Note that, in the correlation analysis processing described with reference to the flowchart of Fig. 15, even in a case where the sensor of interest and the sensor to be compared have a high correlation and are regarded as sensor pair candidates, the processes of steps S138 to S140 may be skipped when they are regarded as a sensor pair by the activation processing and already registered as the substitutable map 292.

Furthermore, in the above example, an example has been described in which the sensing result storage unit 372 and the correlation analysis unit 373 are provided in the vehicle control system 211, but the sensing result storage unit 372 and the correlation analysis unit 373 may be implemented by a server computer or cloud computing existing on a communication network via the communication unit 222.

### <<3. Second Application Example>>

In the above description, an example has been described in which the sensing results of various sensors are stored in the sensing result storage unit 372 during traveling, the correlation between sensors is obtained, and sensors having a correlation higher than the predetermined threshold are registered as the substitutable map 292' as a sensor pair.

However, the sensing results of various sensors may be stored in the sensing result storage unit 372 during traveling, and the sensing results between the sensors included in the sensor pairs in the registered substitutable maps 292 and 292' may be compared to determine the presence or absence of abnormality or failure (malfunction) in any of the sensors of the sensor pairs depending on whether or not the correlation is lower than the predetermined threshold.

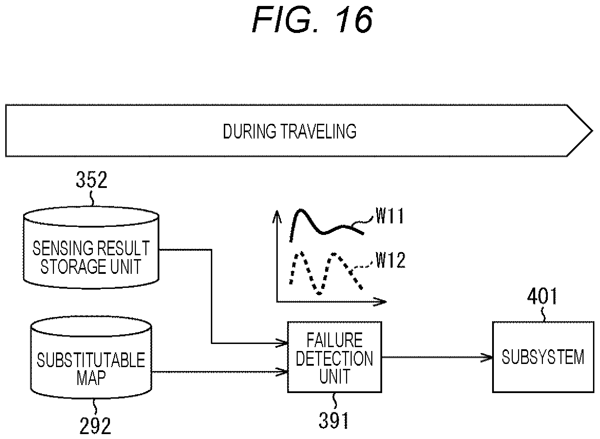

More specifically, for example, it is conceivable to provide a failure detection unit 391 as illustrated in Fig. 16.

That is, the failure detection unit 391 in Fig. 16 reads the sensor pair on the basis of the substitutable map 292 during traveling, and reads the respective sensing results of the two sensors constituting the read sensor pair from the sensing result storage unit 352. Then, the failure detection unit 391 obtains a correlation between the read sensing results of the two sensors and compares the correlation with the predetermined threshold. Here, whether or not a failure or abnormality has occurred is determined depending on whether or not there is no correlation in the sensing results of the sensor pair whose correlation is lower than the predetermined threshold and which should originally have a correlation equal to or higher than the predetermined threshold.

In a case where the two sensing results of the sensor pair have a correlation lower than the predetermined threshold as indicated by waveforms W11 and W12 in Fig. 16, for example, and there is no correlation in the sensing results of the sensor pair that should have a correlation equal to or higher than the predetermined threshold, the failure detection unit 391 determines that an abnormality or a failure has occurred in any of the sensors of the sensor pair, and notifies the subsystem 401 of the failure.

The subsystem 401 referred to herein is, for example, the travel assistance/automated driving control subsystem 331 and the vehicle control subsystem 332 described above, and when notified of abnormality or failure of a sensor, the respective management units 260 and 280 stop processing.

With such a configuration, it is possible to find an abnormality or a failure of a sensor at an early stage, and it is possible to improve safety and stability in automated driving by suppressing processing using a failed sensing result.

### <Configuration example of vehicle control system incorporating failure detection unit>

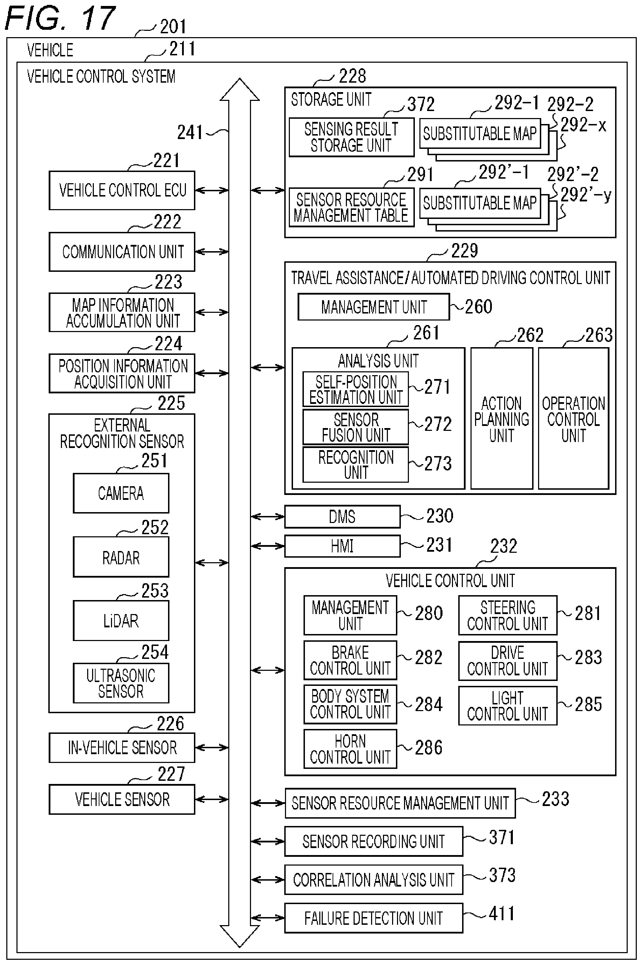

Next, a configuration example of the vehicle control system 211 incorporating a configuration corresponding to the failure detection unit 391 in Fig. 16 will be described with reference to Fig. 17.

Note that, in the vehicle control system 211 of Fig. 17, components having the same functions as those of the vehicle control system 211 of Fig. 13 are denoted by the same reference numerals, and the description thereof will be appropriately omitted.

The vehicle control system 211 of Fig. 17 is different from the vehicle control system 211 of Fig. 13 in that a failure detection unit 411 is newly provided.

The failure detection unit 411 is a configuration corresponding to the failure detection unit 391 in Fig. 16, reads the sensor pair on the basis of the substitutable maps 292 and 292' during traveling, and reads the sensing results of the two sensors constituting the read sensor pair from the sensing result storage unit 372.

Then, the failure detection unit 411 obtains the index of the correlation between the sensing results of the two sensors constituting the read sensor pair, and determines whether or not a failure or abnormality has occurred depending on whether or not there is no correlation in the sensing results of the sensor pair that is lower than the predetermined threshold and should originally have a correlation equal to or higher than the predetermined threshold. The index of the correlation is, for example, a similarity or a correlation coefficient.

In a case where the correlation between the two sensing results of the sensor pair is lower than the predetermined threshold, and there is no correlation between the sensing results of the sensor pair that should have the correlation equal to or higher than the predetermined threshold, the failure detection unit 411 determines that an abnormality or a failure has occurred in any of the sensors of the sensor pair, and notifies the subsystem of the determination. More specifically, the failure detection unit 411 notifies the management units 260 and 280 of the travel assistance/automated driving control unit 229 and the vehicle control unit 232 of the travel assistance/automated driving control subsystem 331 and the vehicle control subsystem 332, which constitute the subsystem, for example.

When notified of information indicating a failure or abnormality of the sensor, the management units 260 and 280 stop the processing of the travel assistance/automated driving control unit 229 and the vehicle control unit 232.

With such a configuration, it is possible to find an abnormality or a failure of a sensor at an early stage, and it is possible to improve safety and stability in automated driving by suppressing processing using a failed sensing result.

### <Failure Detection Processing>

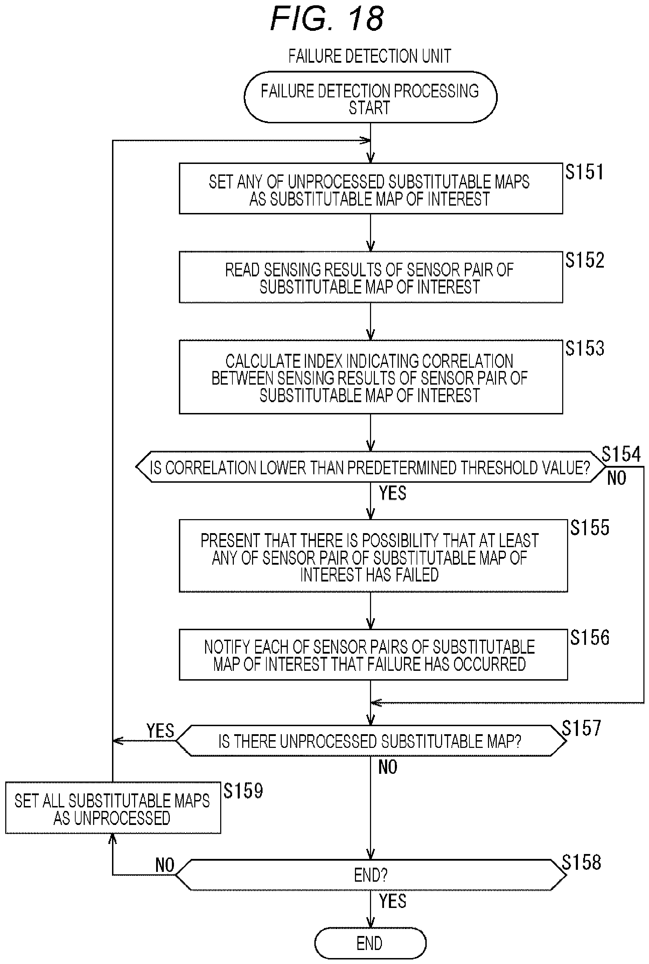

Next, failure detection processing by the vehicle control system 211 of Fig. 17 will be described with reference to a flowchart of Fig. 18.

In step S151, the failure detection unit 411 accesses the storage unit 228, and sets any of the unprocessed substitutable maps 292 and 292' that has not been set as the substitutable map 292 or 292' of interest among the substitutable maps 292 and 292' as the substitutable map 292 or 292' of interest.

In step S152, the failure detection unit 411 accesses the sensing result storage unit 372 and reads the sensing results of the two sensors of the sensor pair of the substitutable map 292 or 292' of interest.

In step S153, the failure detection unit 411 calculates the index indicating the correlation between the sensing results of the two sensors in the substitutable map 292 or 292' of interest. The failure detection unit 411 calculates, for example, similarity of sensing results between the sensor of interest and the sensor to be compared as the index of the correlation.

In step S154, the failure detection unit 411 determines whether or not the correlation between the two sensors of the substitutable map 292 or 292' of interest is lower than the predetermined threshold on the basis of the index of the correlation.

In a case where it is determined in step S154 that the correlation between the two sensors of the substitutable map 292 or 292' of interest is low, the processing proceeds to step S155.

In step S155, the failure detection unit 411 presents, to the HMI 231, information indicating that the correlation between the sensing results of the two sensors of the substitutable map 292 or 292' of interest is lower than the predetermined threshold and there is a possibility that an abnormality or a failure has occurred in any of the sensors.

In step S156, the failure detection unit 411 notifies the management units 260 and 280 of the travel assistance/automated driving control unit 229 and the vehicle control unit 232 of the travel assistance/automated driving control subsystem 331 and the vehicle control subsystem 332, which constitute the subsystem including the two sensors of the substitutable map 292 or 292' of interest. Thus, the management units 260 and 280 of the subsystem including the sensor having a possibility that a failure or an abnormality has occurred stop the processing of the travel assistance/automated driving control unit 229 and the vehicle control unit 232.

Note that, in a case where it is determined in step S154 that the correlation between the two sensors of the substitutable map 292 or 292' of interest is not low, that is, there is no possibility of abnormality or failure of the sensor, the processing of steps S155 and S156 is skipped.

In step S157, the failure detection unit 411 determines whether or not there is the substitutable map 292 or 292' that is unprocessed as the substitutable map 292 or 292' of interest, and in a case where there is the unprocessed substitutable map 292 or 292', the processing returns to step S151.

That is, the processing of steps S151 to S157 is repeated until all the substitutable maps 292 or 292' are set as the substitutable map 292 or 292' of interest, the index of the correlation of the sensing results of the sensor pair is obtained, and the presence or absence of the failure is determined.

Then, in step S157, in a case where there is no substitutable map 292 or 292' that is not set, all the substitutable maps 292 or 292' are set as the substitutable map 292 or 292' of interest, the index of the correlation of the sensing results of the sensor pair is obtained, and it is determined that there is a failure, the processing proceeds to step S158.

In step S158, the failure detection unit 411 determines whether or not the end of the operation is instructed, and in a case where the end is not instructed, the processing proceeds to step S159.

In step S159, the failure detection unit 411 restores the substitutable map 292 or 292' to an unprocessed state of being not set in the substitutable map 292 or 292' of interest, and the processing returns to step S151.

That is, until the operation of the vehicle 201 is stopped and the end of the operation is instructed, the correlation of the sensing results of the sensor pairs of all the substitutable maps 292 or 292' is obtained, and the processing of determining the presence or absence of the failure is repeated.

Then, when the operation of the vehicle control system 211 ends in step S159, the processing is finished.

By the above processing, it is possible to find an abnormality or a failure of a sensor at an early stage, and it is possible to improve safety and stability of automated driving by suppressing processing using a failed sensing result.

Note that, in the above example, an example has been described in which the sensing result storage unit 372, the substitutable maps 292 and 292', and the failure detection unit 411 are provided in the vehicle control system 211, but the sensing result storage unit 372, the substitutable maps 292 and 292', and the failure detection unit 411 may be implemented by a server computer or cloud computing existing on a communication network via the communication unit 222.

### <<4. Example of execution by software>>

Incidentally, the series of processes described above can be executed by hardware, but can also be executed by software. In a case where the series of processing is executed by software, a program constituting the software is installed from a recording medium into, for example, a computer built into dedicated hardware or a general-purpose computer that is capable of executing various functions by installing various programs, or the like.

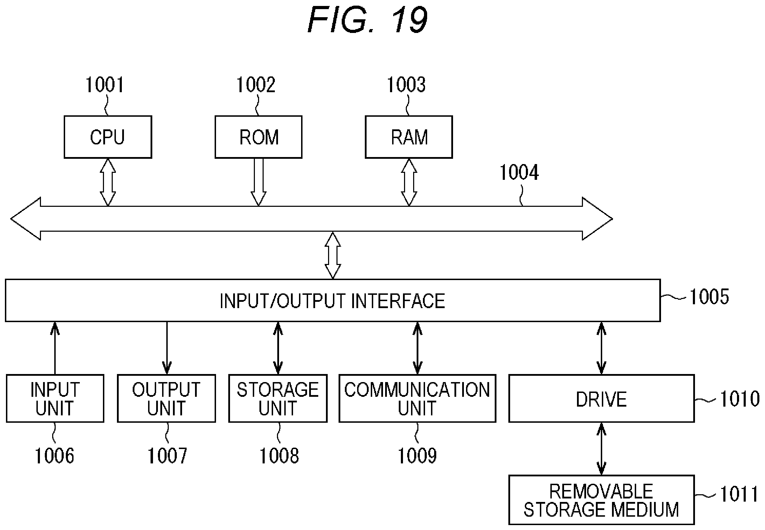

Fig. 19 illustrates a configuration example of a general-purpose computer. This computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

To the input/output interface 1005, an input unit 1006 including an input device such as a keyboard and a mouse by which a user inputs operation commands, an output unit 1007 that outputs a processing operation screen and an image of a processing result to a display device, a storage unit 1008 that includes a hard disk drive and the like and stores programs and various data, and a communication unit 1009 including a local area network (LAN) adapter or the like and executes communication processing via a network represented by the Internet are connected. Furthermore, a drive 1010 that reads and writes data from and to a removable storage medium 1011 such as a magnetic disk (including flexible disk), an optical disk (including compact disc-read only memory (CD-ROM) and digital versatile disc (DVD)), a magneto-optical disk (including Mini Disc (MD)), or a semiconductor memory is connected.

The CPU 1001 executes various processing in accordance with a program stored in the ROM 1002, or a program read from the removable storage medium 1011 such as a magnetic disk, an optical disk, a magneto-optical disk, or a semiconductor memory, installed in the storage unit 1008, and loaded from the storage unit 1008 into the RAM 1003. Furthermore, the RAM 1003 also appropriately stores data necessary for the CPU 1001 to execute various processes, and the like.

In the computer configured as described above, for example, the CPU 1001 loads the program stored in the storage unit 1008 into the RAM 1003 via the input/output interface 1005 and the bus 1004 and executes the program, to thereby perform the above-described series of processing.

The program executed by the computer (CPU 1001) can be provided by being recorded in the removable storage medium 1011 as a package medium or the like, for example. Also, the program can be provided by means of a wired or wireless transmission medium such as a local area network, the Internet, and digital broadcasting.

In the computer, the program can be installed in the storage unit 1008 via the input/output interface 1005 by mounting the removable storage medium 1011 to the drive 1010. Furthermore, the program can be received by the communication unit 1009 via a wired or wireless transmission medium and installed in the storage unit 1008. In addition, the program can be installed in the ROM 1002 or the storage unit 1008 in advance.

Note that the program executed by the computer may be a program that performs processing in a time-series manner in the order described in the present specification, or may be a program that performs processing in parallel or at necessary timing such as when a call is made.

Note that the CPU 1001 in Fig. 19 implements the functions of the travel assistance/automated driving control unit 229, the vehicle control unit 232, and the sensor resource management unit 233 in Fig. 6, the sensor recording unit 371 and the correlation analysis unit 373 in Fig. 13, and the failure detection unit 411 in Fig. 16.

Furthermore, in the present specification, a system is intended to mean assembly of a plurality of components (devices, modules (parts), and the like) and it does not matter whether or not all the components are in the same casing. Therefore, a plurality of devices housed in separate housings and coupled via a network and one device in which a plurality of modules is housed in one housing are both systems.

Note that embodiments of the present disclosure are not limited to the embodiments described above, and various modifications may be made without departing from the scope of the present disclosure.

For example, the present disclosure can have a configuration of cloud computing in which one function is shared by a plurality of devices via a network and processing is performed in cooperation.

Furthermore, each step described in the flowchart described above can be executed by one device or executed by a plurality of devices in a shared manner.

Moreover, in a case where a plurality of processing is included in one step, the plurality of the processing included in the one step can be executed by one device or by a plurality of devices in a shared manner.
<1> An information processing device, including:
   a plurality of subsystems each including
      a sensor that detects a sensing result related to control of automated driving, and
      a processing unit that executes predetermined processing related to the automated driving on the basis of the sensing result detected by the sensor; and
   a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem.
<2> The information processing device according to <1>, in which
   the processing units in the plurality of subsystems notify the sensor resource management unit of sensor resource information of the respective sensors provided in the subsystems, and
   the sensor resource management unit causes the second subsystem, which is different from the first subsystem and includes the sensor that detects a sensing result that is substitutable for a sensing result of the sensor of the first subsystem, to transfer the sensing result of the sensor to the first subsystem on the basis of the sensor resource information of the plurality of subsystems.
<3> The information processing device according to <2>, in which
   the sensor resource management unit sets the sensors of which the sensing results are substitutable as a sensor pair among the respective sensors of the plurality of subsystems on the basis of the sensor resource information, and generates a substitutable map indicating that the sensing results are substitutable for each of the sensor pairs, and
   causes the second subsystem, which is different from the first subsystem and includes the sensor that detects a sensing result that is substitutable for a sensing result of the sensor of the first subsystem, to transfer the sensing result of the sensor to the first subsystem on the basis of the substitutable map.
<4> The information processing device according to <3>, in which
   the sensor resource information includes a sensor type, a data type, an installation position, a sensing area, and a measurement characteristic for each of the sensors, and
   the sensor resource management unit sets the sensors of which the sensing results are substitutable as a sensor pair depending on whether the sensor type, the data type, the installation position, the sensing area, and the measurement characteristic are same or similar on the basis of the sensor resource information, and generates a substitutable map indicating that the sensing results are substitutable between the sensors of the set sensor pair.
<5> The information processing device according to <4>, in which
   the sensor resource management unit generates a sensor resource management table including the sensor type, the data type, the installation position, the sensing area, and the measurement characteristic of the sensor in the sensor resource information, and
   sets the sensor pair on the basis of the sensor resource management table, and generates the substitutable map for each of the set sensor pairs.
<6> The information processing device according to <5>, in which
   the substitutable map is graph-type data that specifies the sensor to be a transfer source of the sensing result that is substitutable and the processing unit to be a transfer destination that uses the sensing result transferred from the transfer source as the sensing result that is substitutable and executes predetermined processing related to the automated driving.
<7> The information processing device according to any one of <1> to <6>, further including:
   a sensing result storage unit that stores a sensing result of each of the sensors of the plurality of subsystems during traveling by the automated driving; and
   a correlation analysis unit that analyzes a correlation of sensing results between the sensors stored in the sensing result storage unit, in which
   the sensor resource management unit sets sensors of which the sensing results are substitutable as a sensor pair on the basis of a correlation that is an analysis result of the correlation analysis unit, and generates a substitutable map indicating that the sensing results are substitutable for each of the set sensor pairs, and
   causes the second subsystem, which is different from the first subsystem and includes the sensor that detects the sensing result that is substitutable for the sensing result of the sensor of the first subsystem, to transfer the sensing result of the sensor to the first subsystem on the basis of the substitutable map.
<8> The information processing device according to <7>, in which
   the sensor resource management unit sets sensors having a correlation analyzed by the correlation analysis unit higher than a predetermined threshold as the sensor pair of which the sensing results are substitutable, and generates a substitutable map indicating that the sensing results are substitutable for each of the set sensor pairs.
<9> The information processing device according to <7>, in which
   the correlation analysis unit analyzes the correlation on the basis of a similarity of sensing results between the sensors or a correlation coefficient stored in the sensing result storage unit.
<10> The information processing device according to <7>, further including:
   a malfunction detection unit that analyzes a correlation of the sensing results stored in the sensing result storage unit of the sensor pair of which the sensing results are substitutable in the substitutable map, and detects a malfunction of the sensors set as the sensor pair on the basis of the correlation that is the analysis result.
<11> The information processing device according to <10>, in which
   the malfunction detection unit detects a malfunction of at least one of the sensors set as the sensor pair, the correlation that is the analysis result being lower than a predetermined threshold.
<12> The information processing device according to <10>, in which
   the malfunction detection unit analyzes a correlation on the basis of a similarity or a correlation coefficient of the sensing results stored in the sensing result storage unit of the sensor pair of which the sensing results are substitutable in the substitutable map, and detects a malfunction of the sensors set as the sensor pair on the basis of the correlation that is the analysis result.
<13> The information processing device according to any one of <1> to <12>, in which
   when a malfunction of the sensor is detected, the processing unit in the first subsystem requests the sensor resource management unit to transfer the sensing result of the sensor of a second subsystem, which is different from the first subsystem and includes the sensor that detects a sensing result that is substitutable for a sensing result of the sensor of the first subsystem, to the first subsystem, and
   the sensor resource management unit causes the second subsystem to transfer the sensing result of the sensor to the first subsystem in response to a request from the processing unit of the first subsystem.
<14> The information processing device according to <13>, in which
   the sensor resource management unit requests the second subsystem to transfer the sensing result of the sensor to the first subsystem in response to the request from the processing unit of the first subsystem, and
   the processing unit in the second subsystem transfers the sensing result of the sensor to the first subsystem in response to a request from the sensor resource management unit.
<15> An information processing method for an information processing device including
   a plurality of subsystems each including
      a sensor that detects a sensing result related to control of automated driving, and
      a processing unit that executes predetermined processing related to the automated driving on the basis of the sensing result detected by the sensor, and
   a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem, the information processing method including:

      causing, by the sensor resource management unit, in a case where a malfunction of the sensor is detected in a first subsystem among the plurality of subsystems, the second subsystem, which is different from the first subsystem and includes the sensor that detects a sensing result that is substitutable for a sensing result of the sensor of the first subsystem, to transfer the sensing result of the sensor to the first subsystem.
<16> A program for causing a computer to function as:
   a plurality of subsystems each including
      a sensor that detects a sensing result related to control of automated driving, and
      a processing unit that executes predetermined processing related to the automated driving on the basis of the sensing result detected by the sensor; and
   a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem.

### REFERENCE SIGNS LIST

- 101: Control system
- 121, 121-1, 121-2: Subsystem
- 122: Sensor resource management unit
- 123: Sensor resource management table
- 124: Substitutable map
- 131, 131-1, 131-2: Sensor
- 132, 132-1, 132-2: Processing unit
- 132a, 132a-1, 132a-2: Management unit
- 201: Vehicle
- 211: Vehicle control system
- 225: External recognition sensor
- 226: Inside-vehicle sensor
- 227: Vehicle sensor
- 228: Storage unit
- 229: Travel assistance/automated driving control unit
- 231: HMI
- 231a: Output unit
- 231b: Input unit
- 232: Vehicle control unit
- 233: Sensor resource management unit
- 251: Camera
- 252: Radar
- 253: LiDAR
- 254: Ultrasonic sensor
- 260, 280: Management unit
- 291: Sensor resource management table
- 292, 292-1 to 292-x, 292', 292'-1 to 292'-y: Substitutable map
- 331: Travel assistance/automated driving control subsystem
- 332: Vehicle control subsystem
- 351: Sensor recording unit
- 352: Sensing result recording unit
- 353: Correlation analysis unit
- 371: Sensor recording unit
- 372: Sensing result recording unit
- 373: Correlation analysis unit
- 391: Failure detection unit
- 401: Subsystem
- 411: Failure detection unit

## Claims

1. An information processing device, comprising:
a plurality of subsystems each including
a sensor that detects a sensing result related to control of automated driving, and
a processing unit that executes predetermined processing related to the automated driving on a basis of the sensing result detected by the sensor; and
a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem.

2. The information processing device according to claim 1, wherein
the processing units in the plurality of subsystems notify the sensor resource management unit of sensor resource information of the respective sensors provided in the subsystems, and
the sensor resource management unit causes the second subsystem, which is different from the first subsystem and includes the sensor that detects a sensing result that is substitutable for a sensing result of the sensor of the first subsystem, to transfer the sensing result of the sensor to the first subsystem on a basis of the sensor resource information of the plurality of subsystems.

3. The information processing device according to claim 2, wherein
the sensor resource management unit sets the sensors of which the sensing results are substitutable as a sensor pair among the respective sensors of the plurality of subsystems on a basis of the sensor resource information, and generates a substitutable map indicating that the sensing results are substitutable for each of the sensor pairs, and
causes the second subsystem, which is different from the first subsystem and includes the sensor that detects a sensing result that is substitutable for a sensing result of the sensor of the first subsystem, to transfer the sensing result of the sensor to the first subsystem on a basis of the substitutable map.

4. The information processing device according to claim 3, wherein
the sensor resource information includes a sensor type, a data type, an installation position, a sensing area, and a measurement characteristic for each of the sensors, and
the sensor resource management unit sets the sensors of which the sensing results are substitutable as a sensor pair depending on whether the sensor type, the data type, the installation position, the sensing area, and the measurement characteristic are same or similar on a basis of the sensor resource information, and generates a substitutable map indicating that the sensing results are substitutable between the sensors of the set sensor pair.

5. The information processing device according to claim 4, wherein
the sensor resource management unit generates a sensor resource management table including the sensor type, the data type, the installation position, the sensing area, and the measurement characteristic of the sensor in the sensor resource information, and
sets the sensor pair on a basis of the sensor resource management table, and generates the substitutable map for each of the set sensor pairs.

6. The information processing device according to claim 5, wherein
the substitutable map is graph-type data that specifies the sensor to be a transfer source of the sensing result that is substitutable and the processing unit to be a transfer destination that uses the sensing result transferred from the transfer source as the sensing result that is substitutable and executes predetermined processing related to the automated driving.

7. The information processing device according to claim 1, further comprising:
a sensing result storage unit that stores a sensing result of each of the sensors of the plurality of subsystems during traveling by the automated driving; and
a correlation analysis unit that analyzes a correlation of sensing results between the sensors stored in the sensing result storage unit, wherein
the sensor resource management unit sets sensors of which the sensing results are substitutable as a sensor pair on a basis of a correlation that is an analysis result of the correlation analysis unit, and generates a substitutable map indicating that the sensing results are substitutable for each of the set sensor pairs, and
causes the second subsystem, which is different from the first subsystem and includes the sensor that detects the sensing result that is substitutable for the sensing result of the sensor of the first subsystem, to transfer the sensing result of the sensor to the first subsystem on a basis of the substitutable map.

8. The information processing device according to claim 7, wherein
the sensor resource management unit sets sensors having a correlation analyzed by the correlation analysis unit higher than a predetermined threshold as the sensor pair of which the sensing results are substitutable, and generates a substitutable map indicating that the sensing results are substitutable for each of the set sensor pairs.

9. The information processing device according to claim 7, wherein
the correlation analysis unit analyzes the correlation on a basis of a similarity of sensing results between the sensors or a correlation coefficient stored in the sensing result storage unit.

10. The information processing device according to claim 7, further comprising:
a malfunction detection unit that analyzes a correlation of the sensing results stored in the sensing result storage unit of the sensor pair of which the sensing results are substitutable in the substitutable map, and detects a malfunction of the sensors set as the sensor pair on a basis of the correlation that is the analysis result.

11. The information processing device according to claim 10, wherein
the malfunction detection unit detects a malfunction of at least one of the sensors set as the sensor pair, the correlation that is the analysis result being lower than a predetermined threshold.

12. The information processing device according to claim 10, wherein
the malfunction detection unit analyzes a correlation on a basis of a similarity or a correlation coefficient of the sensing results stored in the sensing result storage unit of the sensor pair of which the sensing results are substitutable in the substitutable map, and detects a malfunction of the sensors set as the sensor pair on a basis of the correlation that is the analysis result.

13. The information processing device according to claim 1, wherein
when a malfunction of the sensor is detected, the processing unit in the first subsystem requests the sensor resource management unit to transfer the sensing result of the sensor of a second subsystem, which is different from the first subsystem and includes the sensor that detects a sensing result that is substitutable for a sensing result of the sensor of the first subsystem, to the first subsystem, and
the sensor resource management unit causes the second subsystem to transfer the sensing result of the sensor to the first subsystem in response to a request from the processing unit of the first subsystem.

14. The information processing device according to claim 13, wherein
the sensor resource management unit requests the second subsystem to transfer the sensing result of the sensor to the first subsystem in response to the request from the processing unit of the first subsystem, and
the processing unit in the second subsystem transfers the sensing result of the sensor to the first subsystem in response to a request from the sensor resource management unit.

15. An information processing method for an information processing device including
a plurality of subsystems each including
a sensor that detects a sensing result related to control of automated driving, and
a processing unit that executes predetermined processing related to the automated driving on a basis of the sensing result detected by the sensor, and
a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem, the information processing method comprising:
causing, by the sensor resource management unit, in a case where a malfunction of the sensor is detected in a first subsystem among the plurality of subsystems, the second subsystem, which is different from the first subsystem and includes the sensor that detects a sensing result that is substitutable for a sensing result of the sensor of the first subsystem, to transfer the sensing result of the sensor to the first subsystem.

16. A program for causing a computer to function as:
a plurality of subsystems each including
a sensor that detects a sensing result related to control of automated driving, and
a processing unit that executes predetermined processing related to the automated driving on a basis of the sensing result detected by the sensor; and
a sensor resource management unit that causes, in a case where a malfunction of the sensor is detected in a first subsystem among the plurality of subsystems, a second subsystem, which is different from the first subsystem and includes the sensor that detects a sensing result that is substitutable for a sensing result of the sensor of the first subsystem, to transfer the sensing result of the sensor to the first subsystem.
